# EUROPEAN PATENT APPLICATION

(11) **EP 1 439 477 A1**
(43) Date of publication of application: **21.07.2004**
(21) Application number: 02751834.9
(22) Date of filing: 06.08.2002
(51) Int. Cl.: G06F 17/60

(54) **ELECTRONIC DEVICE**

(30) Priority: 10.08.2001 JP 2001244844
(71) Applicant: MATSUSHITA ELECTRIC INDUSTRIAL CO., LTD., Kadoma-shi, Osaka 571-8501 (JP)
(72) Inventor: TAKAHASHI, Eiji, Suginami-ku, Tokyo 166-0014 (JP)
(74) Representative: Grünecker, Kinkeldey, Stockmair & Schwanhäusser Anwaltssozietät
(86) International application number: PCT/JP2002/007998
(87) International publication number: WO 2003/017159

(57) **Abstract**

To provide an electronic device with an ability to provide services appropriate for situations. For this reason, the electronic device comprises: a situation information acquisition part for acquiring situation information, which is dynamic information; a determining part for determining whether a service can be executed; a service information acquisition part for acquiring information for executing a service; and an execution part for executing an acquired service. A condition information acquisition part is provided so that, when the determining part determines that a service cannot be executed, it acquires service available information for the service to become available. Furthermore, a situation information correctness determining part is provided which determines correctness of the situation information acquired in the situation information acquisition part.

## Description

### BACKGROUND OF THE INVENTION

### Field of the Invention

The present invention relates to an electronic device that provides services according to situations.

### Description of the Prior Art

Recently, with the widespread use of the Internet, business forms of marketing contents and licenses through the Internet or the like have emerged and are in an increasing trend.

Contents refer to electronic data of characters, sounds, images, and maps, games and software, and combinations of them. The rendering of contents refers to, e.g., the displaying of characters and images on a display unit, the output of sounds from a loudspeaker, and the execution of games and software.

Licenses refer to information for granting some approval; for example, information for granting approval for rendering, downloading, or storing contents, electronic tickets for granting approval for entrance to specific places, and electronic coupons for granting approval for purchasing products and services at discount prices.

The following services have been conventionally provided: a current position of a cellular phone is detected to display a map in the vicinity of the position; and cellular phones drop bands from full rate to half rate, taking communication situations into account.

In such conventional services for cellular phones, the cellular phones have directly displayed information sent from base stations, regardless of the situation in which the cellular phones are put. An attempt to display information that cannot be displayed has resulted in mere output of a message indicating that it cannot be displayed; why it cannot be displayed and what to do to enable display have been not indicated to the users of the cellular phones.

Although music data delivery to portable devices such as cellular phones is in common use, a license for rendering music data in the portable devices has been focused on charge payment only; for example, the provision of a license to only those who have entered a concert of a specific artist has been impossible, so that it has been impossible to increase the value of the concert.

As persons having cellular phones move, a broadcast station to be watched has had to be manually selected.

Conventionally, it has been impossible to receive information of other portable devices near a given portable device; for example, in meeting at a crowded place, it has been impossible to easily know where a party concerned is.

As described above, in conventional electronic devices, particularly portable devices, and services using them, services appropriate for different situations such as indications appropriate for a current position and the provision of added value for people satisfying specific conditions have not been provided.

### SUMMARY OF THE INVENTION

The present invention has been made in view of the conventional drawbacks as described above, and a first object thereof is to provide an electronic device capable of providing services appropriate for different situations.

A second object of the present invention is to selectively display information sent to an electronic device, the selected information reflecting the situation of the electronic device, and tell the user of the electronic device what to do to make services executable.

To solve the problems, the present invention first provides an electronic device comprising: a situation information acquisition part; a determining part for determining whether a service can be executed, based on situation information acquired in the situation information acquisition part; a service information acquisition part for acquiring service information, based on determination of the determining part; an execution part for executing acquired service information; and a situation information correctness determining part for determining the correctness of situation information acquired in the situation information acquisition part.

Thereby, correct situation information can be acquired to provide services.

Second, situation information is acquired from plural means information sources to determine its correctness.

Thereby, correct situation information can be acquired to provide services.

Third, the correctness of situation information is determined using a reliability rank provided based on combinations of information sources and information acquisition routes and/or an accuracy rank provided based on information sources.

Thereby, correct situation information can be acquired to provide services.

Fourth, the present invention provides the electronic device comprising: the situation information acquisition part; the determining part for determining whether a service can be executed, based on situation information acquired in the situation information acquisition part; the service information acquisition part for acquiring service information, based on determination of the determining part; the execution part for executing acquired service information; and a condition information acquisition part for, when the determining part determines that a service cannot be executed, acquiring service available information for the service to become available.

Thereby, information sent to the electronic device, without being directly displayed, can be selectively displayed according to the situation of the electronic device, making it possible for the user to know what to do to make the service executable.

Fifth, certain service information is made to include recommendation information for recommending the acquisition of other related service information.

Thereby, an advertising effect can be obtained.

Sixth, service information is information for acquiring and providing electronic information.

Thereby, for example, electronic values such as electronic tickets and contents can be delivered and used.

Seventh, service information is information for making electronic information available.

Thereby, for example, electronic values such as delivered electronic tickets and contents can be used.

Eighth, it is determined whether or not situation information satisfies compliance situation information as one of use conditions.

Thereby, services can be provided according to more specific situations.

Ninth, service information is information for acquiring and providing licenses.

Thereby, for example, electronic values such as electronic tickets and contents can be used in limited areas or delivered to limited areas.

Tenth, service information is information for canceling and updating licenses.

Thereby, licenses can be elaborately managed according to the situation of the electronic device.

### BRIEF DESCRIPTION OF THE DRAWINGS

FIG. 1 is a functional block diagram of an electronic device in a first embodiment;
FIG. 2 is a flowchart for explaining the operation of the electronic device in the first embodiment;
FIG. 3 is a functional block diagram of a computer realizing an electronic device;
FIG. 4 is a diagram showing an electronic device acquiring situation information of another electronic device;
FIG. 5 is a functional block diagram showing a case where the functions of the electronic device in the first embodiment are realized by plural electronic devices;
FIG. 6 is a functional block diagram of an electronic device in a second embodiment;
FIG. 7 is a functional block diagram showing another configuration of the electronic device in the second embodiment;
FIG. 8 is a flowchart for explaining the operation of the electronic device in the second embodiment;
FIG. 9 is a functional block diagram showing another configuration of the electronic device in the second embodiment;
FIG. 10 is a flowchart for explaining the operation of the electronic device having the configuration of FIG. 9;
FIG. 11 is a functional block diagram of an electronic device in a third embodiment;
FIG. 12 is a diagram showing the format of contents in the third embodiment;
FIG. 13 is a diagram showing the format of license in the third embodiment;
FIG. 14 is a diagram showing a description of an event hall in the third embodiment;
FIG. 15 is a diagram showing a description of an event hall in the third embodiment;
FIG. 16 is a flowchart for explaining the operation of the electronic device in the third embodiment;
FIG. 17 is a sequence diagram for explaining the operation of the electronic device in the third embodiment;
FIG. 18 is a sequence diagram for explaining the operation of the electronic device in the third embodiment;
FIG. 19 is a sequence diagram for explaining the operation of the electronic device in the third embodiment;
FIG. 20 is a sequence diagram for explaining the operation of the electronic device in the third embodiment;
FIG. 21 is partial block diagram showing a configuration for determining whether situation information is correct, in the third embodiment;
FIG. 22 is a diagram showing the format of a license at the time of canceling the license in the third embodiment;
FIG. 23 is a diagram showing the format of a license at the time of updating the license in the third embodiment;
FIG. 24 is a functional block diagram of the electronic device in a fourth embodiment;
FIG. 25 is a diagram showing the format of contents in the fourth embodiment;
FIG. 26 is a diagram showing the format of a license in the fourth embodiment;
FIG. 27 is a flowchart for explaining the operation of an electronic device in the fourth embodiment;
FIG. 28 is a sequence diagram for explaining the operation of the electronic device in the fourth embodiment;
FIG. 29 is a sequence diagram for explaining the operation of the electronic device in the fourth embodiment;
FIG. 30 is a sequence diagram for explaining the operation of the electronic device in the fourth embodiment;
FIG. 31 is a diagram for explaining a case where situation information is acquired from a communications channel; and
FIG. 32 is a diagram for explaining a case where situation information is acquired from other than a communications channel.

### DESCRIPTION OF THE PREFERRED EMBODIMENTS

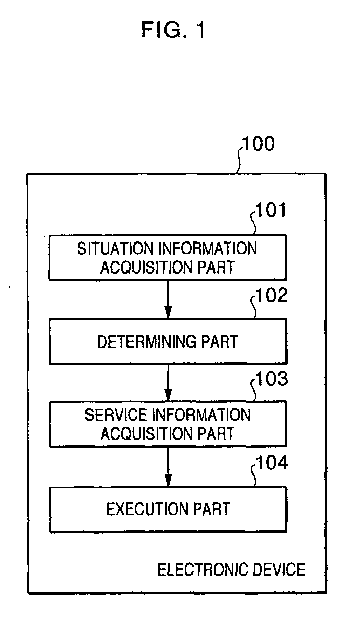

Hereinafter, embodiments of the present invention will be described using FIGS. 1 to 32. The present invention is not limited to these embodiments and may be realized in various ways without departing the spirit thereof.

### (First embodiment)

FIG. 1 is a functional block diagram of an electronic device in a first embodiment of the present invention. In FIG. 1, the reference numeral 100 designates the whole of the electronic device; 101, a situation information acquisition part; 102, a determining part; 103, a service information acquisition part; and 104, an execution part.

The situation information acquisition part 101 acquires situation information, which is dynamic information. The word "dynamic" denotes that the contents of information may change every acquisition or are undecided until it has been acquired. A special "dynamic" case includes a case where the same information whose contents may not change for every acquisition is obtained if an information source is decided though no information source is decided in advance.

The term "situation information" refers to information about situations of the inside of the electronic device and the outside thereof. Therefore, dynamic situation information includes, e.g., information about who owns the electronic device, or ambient temperature and humidity and atmospheric pressure, and information obtained from a communications channel when the electronic device is connected to it. Examples of situation information that the same information is obtained for every acquisition if an information source is decided though no information source is decided in advance include the operation entity of a connected communications channel. Particularly, bands provided by communications channels, and disconnection information indicating a situation at communication disconnection when communications are conducted using a communications channel can be listed as examples of the situation information. Communication charges obtained from the operation entity of the communications channel are also included in the situation information. Position information indicating the position of the electronic device and movement information indicating movement situations are also included in the situation information. The position information and movement information contain history information indicating past states such as routes used in the past, passage speeds, and the number of passages through same points. Situation information obtained in the situation information acquisition part 101 includes not only the situation information of the electronic device itself but also dynamic situation information indicating the states of other devices communicating with it. Particularly, when the electronic device 100 is connected through a communications channel, the situation information may be communication party identification information for identifying a communication party.

Position information and movement information can be obtained, for example, by obtaining base station information through a communications channel, by use of a GPS (global positioning system) satellite, by use of a speed sensor, accelerator sensor or the like mounted in the electronic device, and by conducting close communication with an embedded tag, which is a fixed device.

The determining part 102 determines whether services can be executed, from situation information acquired in the situation information acquisition part 101. The word "services" refer to functions that can be enjoyed using specific operations of the electronic device or the electronic device. Examples of the services include the operation of displaying maps in the vicinity of the electronic device, the operation of downloading music data and storing them in media, the operation of rendering music data stored in media, and the discounting of product charges by coupons displayed by the electronic device. The determining part 102 determines whether services can be executed, from situation information acquired in the situation information acquisition part 101.

The service information acquisition part 103 acquires service information for executing services. That is, it acquires information required by the electronic device to execute specific operations. For example, if a specific operation is to display a map, information required to execute the operation such as the acquiring of URL for map data and the acquiring of the address of a server for storing music data is acquired. Service information is stored inside the electronic device 100 or acquired from outside the electronic device 100. Cases where service information is acquired from outside the electronic device 100 include, e.g., a case where the owner of the electronic device 100 acquires an address to be inputted as service information, and a case where the electronic device 100 acquires service information by querying a server.

Service information for executing services is, more specifically, information for acquiring or providing electronic information, or information for making electronic information utilizable.

Electronic information denotes a wide range of information that can be electronically handled, including electronic values such as electronic money, electronic ticket, and electronic coupon of license, and contents.

The acquisition of electronic information denotes that the electronic information is passed between devices concerned after a receiving device determines whether to receive the electronic information. For example, a user terminal such as a portable terminal to use electronic information has a situation information acquisition part, a determining part, a service information acquisition part, an execution part, and a condition information acquisition part; the user terminal itself performs the above processing. The situation information acquisition part often acquires situation information of the user terminal itself.

The provision of electronic information denotes that the electronic information is passed between devices concerned after a passing device determines whether to pass the electronic information. For example, a server communicating with user terminals and providing electronic information to the user terminals has a situation information acquisition part, a determining part, a service information acquisition part, an execution part, and a condition information acquisition part; the server performs the above processing. The situation information acquisition part often acquires situation information of the user terminals.

Use of electronic information denotes displaying characters and video, outputting sounds from a loudspeaker, rendering of contents such as game and software execution, and using electronic values such as electronic money, electronic ticket, and electronic coupon for spending.

To make the electronic information available requires that the determining part determines that situation information acquired in the situation information acquisition part satisfies compliance situation information included in a license. For example, for electronic information delivered in an encrypted or guarded form, only when the determining part determines that compliance situation information is satisfied, contents can be rendered or used by decrypting the contents using a decryption key included in the license.

The execution part 104 executes service information. That is, it executes information required to execute a specific operation and lets the electronic device perform the specific operation. For example, for the displaying of map data, the map data is actually acquired from URL for the map data. From the address of a server storing music data, access is made to the address to download music data.

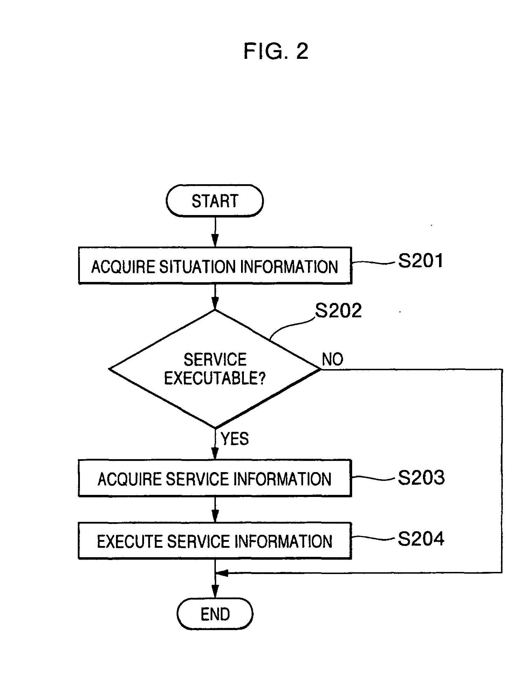

FIG. 2 is a flowchart for explaining the operation of the electronic device of the present invention. In step S201, the situation information acquisition part 101 is used to acquire situation information. In step S202, the determining part 102 is used to determine whether service can be executed, from the situation information acquired in the situation information acquisition part 101. If it is determined as inexecutable, the processing terminates, and if it is determined as executable, control transfers to step S203, where the service information acquisition part 103 is used acquire service information. In step 204, the execution part 104 is used to execute the acquired service information.

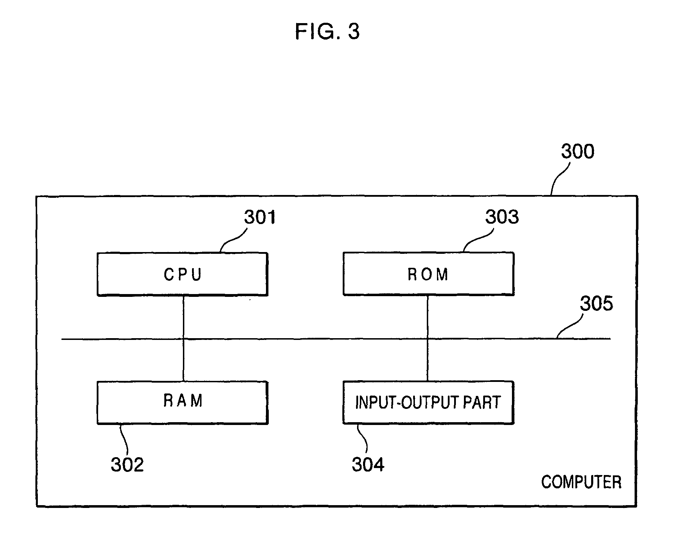

The electronic device 100 can be realized using, e.g., a computer 300 shown in FIG. 3. The computer 300 comprises a CPU 301, a RAM 302, a ROM 303, and an input-output part 304, which are connected to one another through a bus 305.

A program for instructing the CPU 301 to execute the steps of the flowchart shown in FIG. 2 is stored in the ROM 303, and loaded into the RAM 302 for processing by the CPU 301. The input-output part 304 realizes the situation information acquisition part 101 for acquiring situation information, and performs input and output concerned in service execution.

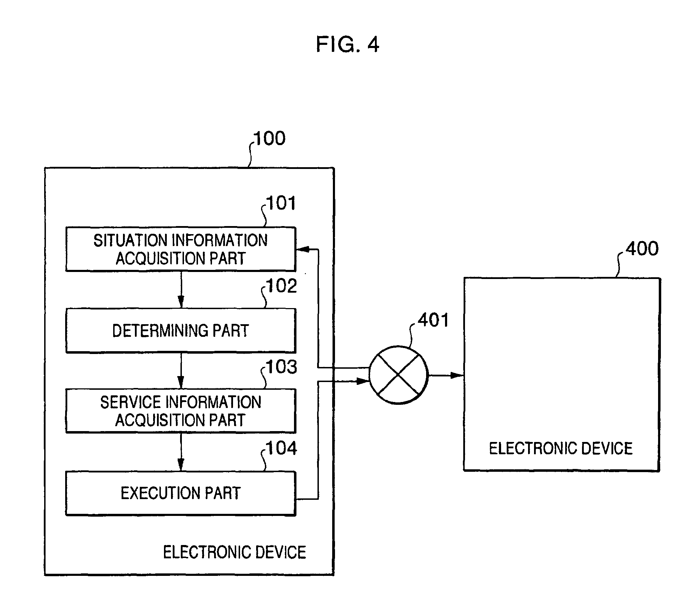

FIG. 4 shows the electronic device 100 that executes service information, based on situation information of another electronic device 400. The electronic device 100 is connected with the electronic device 100 through a communications channel 401. In the electronic device 100, the situation information of the electronic device 400 obtained from the communications channel 401 is acquired by the situation information acquisition part 101; the determining part 102 determines whether service can be executed; service information is acquired by the service information acquisition part 103; the service information is executed by the execution part 104; and a result of the execution is sent to the communications channel 401.

In the case where position information of the electronic device 400 is obtained as situation information through the communications channel 401, based on information of a base station with which the electronic device 400 is communicating, the situation information acquisition part 101 acquires the position information and the determining part determines whether service can be executed, from the position information. For example, if the contents of service are to provide a certain license if the electronic device 400 exists in a specific location, it is determined whether the electronic device 400 exists in the specific location; in this case, the service information acquisition part 103, for example, obtains an IP address and a port number of communication for sending the license to the electronic device 400, and the executing part 104 provides the license to a communication destination identified by the IP address and port number.

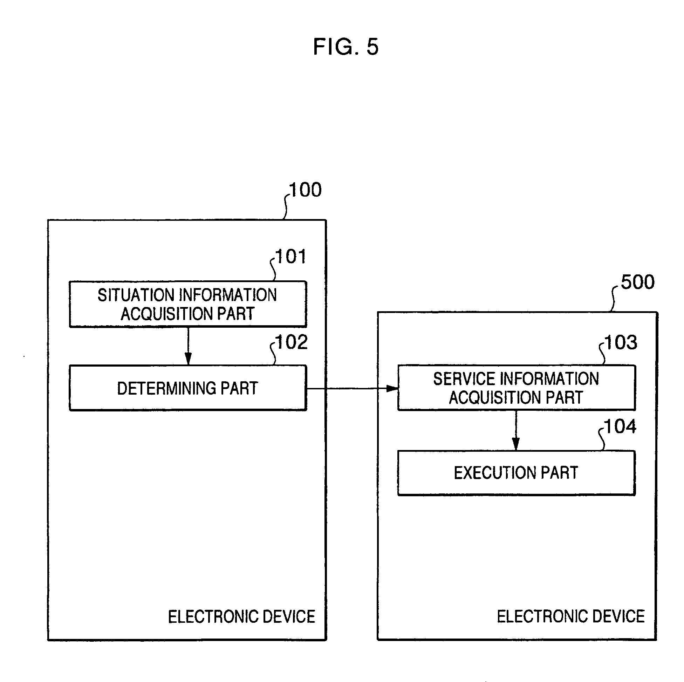

In FIGS. 1 and 4, inside one electronic device are, as processing parts, placed the situation information acquisition part 101, the determining part 102, the service information acquisition part 103, and the execution part 104. However, the processing parts can be placed separately among plural electronic devices. FIG. 5 is a functional block diagram showing an example that the processing parts are placed separately among plural electronic devices; the situation information acquisition part 101 and the determining part 102 are placed in the electronic device 100, and the service information acquisition part 103 and the execution part 104 are placed in an electronic device 500 connected with the electronic device 100 through some channel. A result determined in the determining part 102 is sent to the electronic device 500 from the electronic device 100 through some channel, and the service information acquisition part 103 of the electronic device 500 acquires service information, based on the result. Placing the processing parts in two electronic devices as shown in FIG. 5 is only an example; it is also possible to place the processing parts in three or more electronic devices.

By such an embodiment, services appropriate for situation information obtained by the electronic device can be executed. For example, information sent to the electronic device, without being directly displayed, can be selectively displayed according to the situation of the electronic device.

### (Second embodiment)

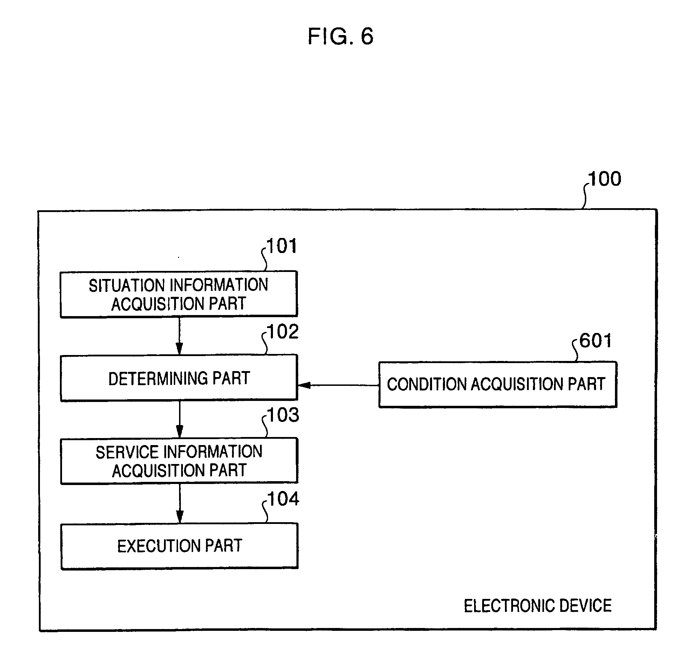

FIG. 6 shows a functional block diagram of the electronic device 100 in a second embodiment of the present invention. A difference from the first embodiment is that a condition acquisition part 601 is added. Accordingly, the following points are the same as the first embodiment: situation information is obtained through the communications channel; the situation information is movement information, position information, or communication party identification information; the situation information is history information, information indicating the situation of the local electronic device, or information indicating the situation of other communicating devices. The second embodiment is also the same as the first embodiment in that the system can be realized by the computer 300.

The condition acquisition part 601 acquires a condition for selectively executing service according to situation information acquired in the situation information acquisition part 101. Specifically, the condition acquisition part 601 acquires a condition for selectively executing one of one or more services. ("Execution" of one of plural services may be described as "selection"). For example, when service A is associated with the condition that "an electronic device exists in Shinagawa-ku, Tokyo", the condition that "an electronic device exists in Shinagawa-ku, Tokyo" is acquired. Such a condition is selected from among conditions stored in the electronic device 100, or from information sent from outside the electronic device 100 in association with a service identifier for identifying service. Also, the determining part 102 can use a condition acquired in the condition acquisition part 601 as a material for determining whether service can be executed.

By providing the electronic device 100 with the condition acquisition part 601 in this way, the contents of providable services, not services defined in advance can be changed every moment, and it can be determined from situation information whether services can be executed.

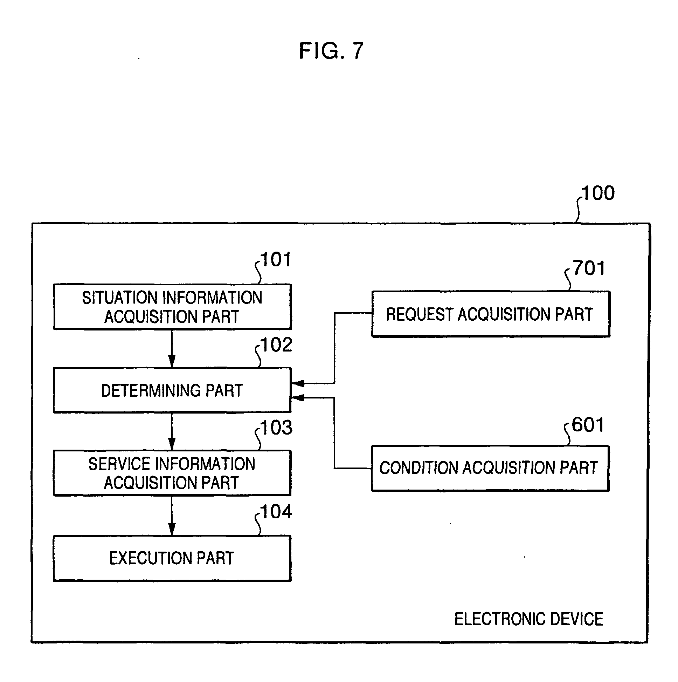

As shown in FIG. 7, the electronic device 100 may be provided with a request acquisition part 701. The request acquisition part 701 acquires a request for service provided based on situation information. The word "provided" denotes that whether execution is possible is determined in the determining part 102, that service information is acquired in the service information acquisition part 103, and that the acquired service information is executed in the executing part 104. The word "a request for service", which refers to a request to provide the service, is usually issued by an operation on the electronic device 100 by the owner thereof but may be issued by other electronic devices or automatically issued by the electronic device if predefined conditions are satisfied.

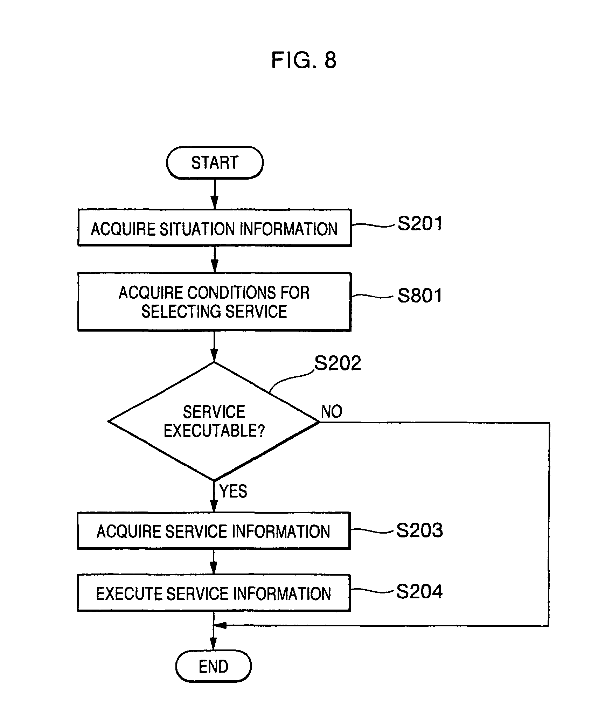

The operation of the electronic device 100 having the condition acquisition part 601 and the request acquisition part 701 is performed according to a flowchart shown in FIG. 8. In step S201, situation information is acquired by the situation information acquisition part 101. In step S801, a condition for executing or selecting service is acquired by the condition acquisition part 601. According to whether the condition acquired by this step is satisfied, services associated with the condition can be narrowed and the names of the narrowed services are presented to the owner of the electronic device 100, thereby making it possible to prevent the execution or selection of undesired services. The condition can also be used in the determining part 102 to determine whether service can be executed. An owner's desire for services to be provided can be detected through the request acquisition part 701. Processing below is the same as that in FIG. 2. Although step S801 is executed after step S201 in the flowchart of FIG. 8, since there is no dependence relation between step S201 and step S801, step S201 may be executed after execution of step S801 or step S201 and step S801 may be executed in parallel.

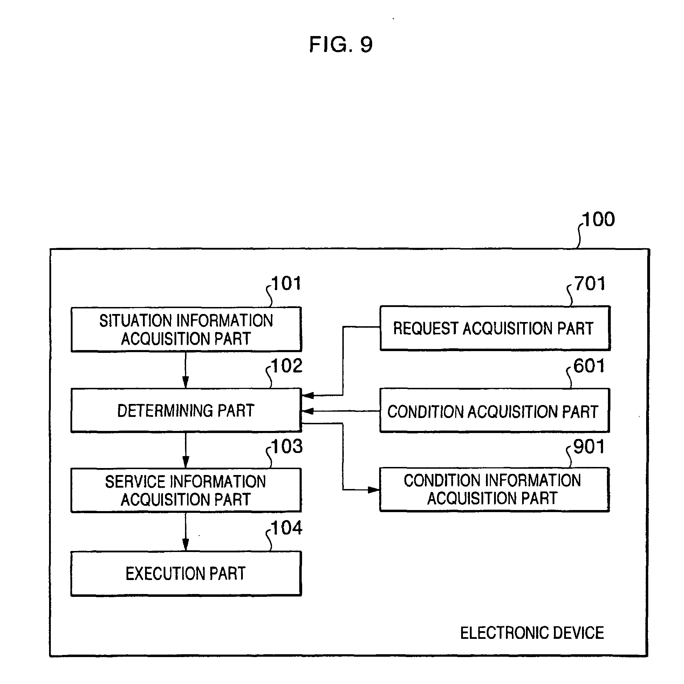

As shown in FIG. 9, when the electronic device 100 has the request acquisition part 701, it may have a condition information acquisition part 901. When the determining part 102 determines that a service cannot be executed, the condition information acquisition part 901 acquires situation information for the service to become available. "Situation information" referred to here has a different meaning from situation information acquired in the situation information acquisition part 101 and situation information used for determination in the determining part 102. It refers to a condition that must be satisfied for service to become available. For example, when a service that cannot be executed if the electronic device 100 does not exist in Higashi Shinagawa 4-Chome Shinagawa-ku, Tokyo is requested in Minato-ku, Tokyo, the determining part 102 determines that the service cannot be executed; in such a situation, a condition that the electronic device 100 exists in Higashi Shinagawa 4-Chome Shinagawa-ku, Tokyo is situation information acquired in the condition information acquisition part 901.

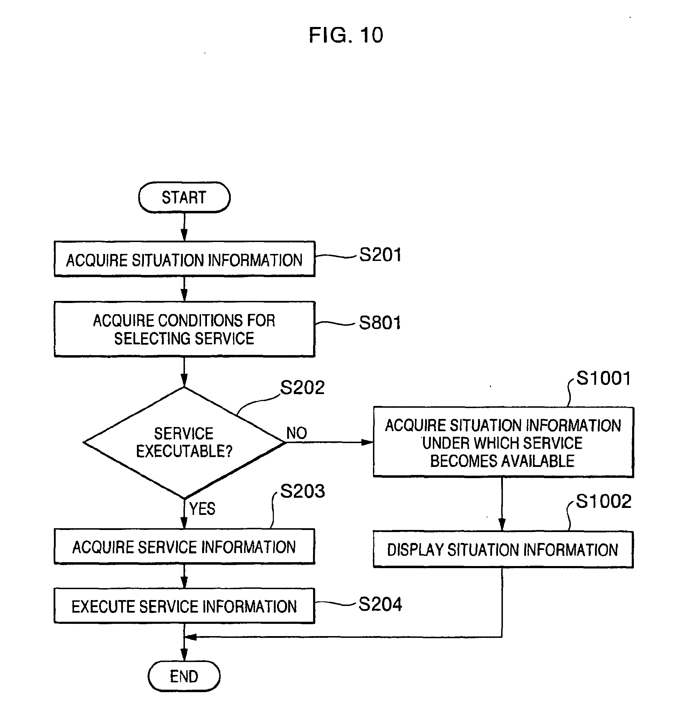

FIG. 10 is a flowchart for explaining processing in the case where the electronic device 100 has the request acquisition part 701. The flowchart is basically the same as the flowchart in FIG. 8, except that step S1001 and step S1002 are executed when it is determined in step S202 that a service cannot be executed.

In step S1001, situation information under which service becomes available is acquired by the condition information acquisition part 901. The situation information is acquired using the situation in which it is determined in the determining part 102 that a service cannot be executed. For example, in the case where service can be executed if the electronic device 100 exists in Higashi Shinagawa 4-Chome Shinagawa-ku, Tokyo, if it is determined that the service cannot be executed because the electronic device 100 exists in Minato-ku, Tokyo, the condition that "the electronic device 100 must exist in Higashi Shinagawa 4-Chome Shinagawa-ku, Tokyo" is acquired. In step S1002, the acquired condition information is displayed. Alternatively, notification may be made to the owner of the electronic device 100 by voice; the owner is notified that it is a condition for the service to become available that "the electronic device 100 exists in Shinagawa 4-Chome Shinagawa-ku, Tokyo". Normally, since whether the electronic device 100 exists in Higashi Shinagawa 4-Chome Shinagawa-ku, Tokyo is determined by comparing coordinate positions, the character string of Higashi Shinagawa 4-Chome Shinagawa-ku, Tokyo, which is understandable to human, is not contained in the condition. Accordingly, the condition, represented by a coordinate position, that "the electronic device 100 exists in Higashi Shinagawa 4-Chome Shinagawa-ku, Tokyo" is associated with the character string of "Higashi Shinagawa 4-Chome Shinagawa-ku, Tokyo", and stored in the electronic device 100. If the condition represented by the coordinate position is not satisfied, the associated character string is acquired.

Hereinafter, a description will be made of an embodiment of the present invention that acquires and provides a license.

The acquisition of a license denotes that the license is passed between devices after a receiving device determines whether to receive the license. For example, a user terminal such as a portable terminal to use a license has a situation information acquisition part, a determining part, a service information acquisition part, an execution part, and a condition information acquisition part; the user terminal itself performs the above processing. The situation information acquisition part often acquires situation information of the user terminal itself.

The provision of a license denotes that the electronic information is passed between devices after a passing device determines whether to pass the license. For example, a server communicating with user terminals and providing licenses to the user terminals has a situation information acquisition part, a determining part, a service information acquisition part, an execution part, and a condition information acquisition part; the server performs the above processing. The situation information acquisition part often acquires situation information of the user terminals.

### (Third embodiment)

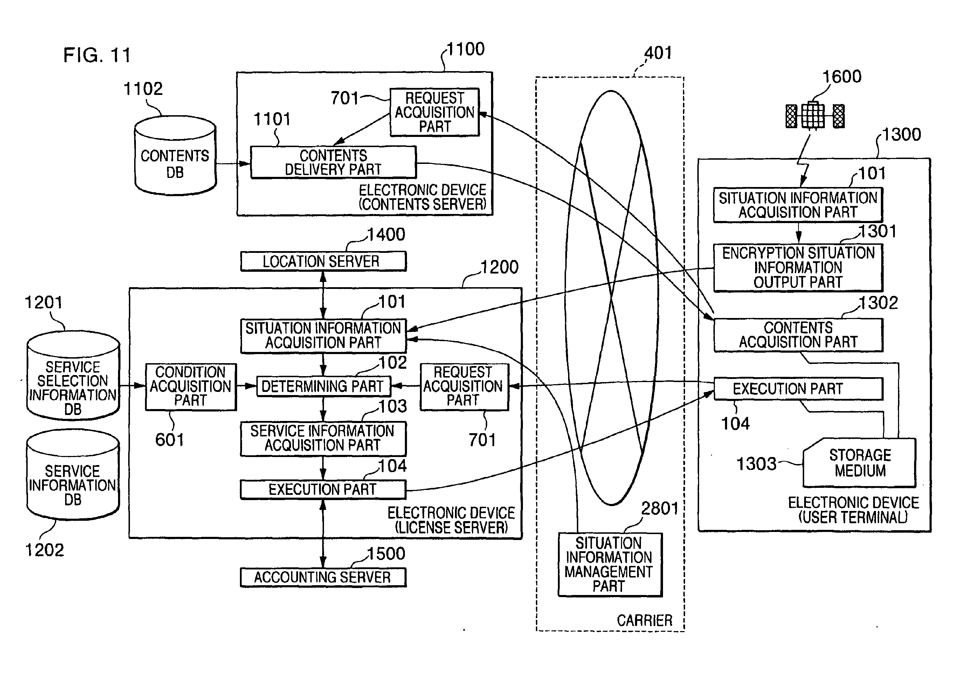

FIG. 11 shows a functional block diagram of the electronic device in a third embodiment of the present invention. The present embodiment relates to a license limited to event halls. A user gets music contents of a certain artist in advance by an electronic device, which is a terminal owned by him or her, and then moves to an event hall of the artist to get a license, at which time the music contents becomes reproducible. The license is delivered to only terminals within the event hall. In FIG. 11, the reference numeral 1100 designates an electronic device which is a contents server for delivering music contents; 1200, an electronic device which is a license server for providing licenses; and 1300, an electronic device which is a user terminal owned by a user. Between the contents server 1100 and the user terminal 1300, and between the license server 1200 and the user terminal 1300, communication is conducted through a communications channel 401. In the contents server 1100, 701 designates a request acquisition part; 1101, a contents delivery part; and 1102, a contents database. In the license server 1200, 101 designates a situation information acquisition part; 102, a determining part; 103, a service information acquisition part; 104, an execution part; 601, a condition acquisition part; 701, a request acquisition part; 1201, a service selection information database; and 1202, a service information database. In the user terminal 1300, 101 designates a situation information acquisition part; 104, an execution part; 1301, an encryption situation information output part; 1302, a contents acquisition part; and 1303, a storage medium. Moreover, 1400 designates a location server; 1500, an accounting server; and 1600, GPS satellites.

The contents server 1100 delivers music contents in response to a request. The request acquisition part 701 receives a request to acquire music contents, an in response to the request, the contents delivery part 1101 gets the music contents from the contents database 1102 and delivers them. The music contents read from the contents database 1102 may be processed in the contents delivery part 1101 before being delivered. Although, in the present embodiment, the contents server 1100 for delivering music contents and the contents database 1102 for holding music contents are separated from each other, the contents database 1102 may be within the contents server 1100.

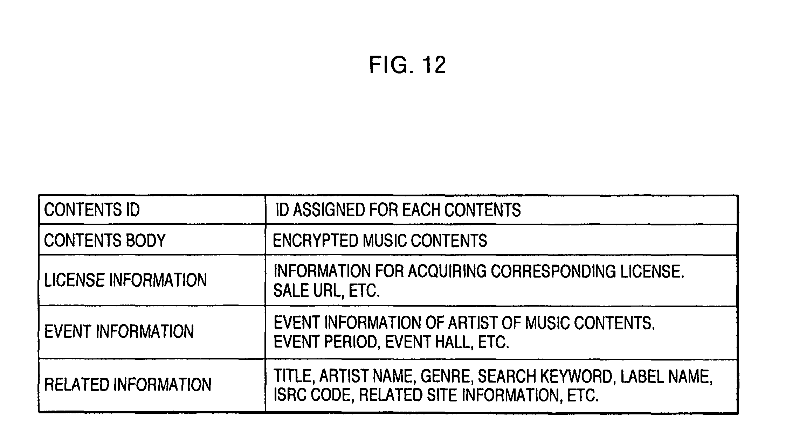

FIG. 12 shows the contents of music contents. In this example, music contents consist of contents ID, contents body, license information, event information, and related information. The contents ID is an ID assigned for each contents. The contents body is music data encrypted according to an algorithm such as, e.g., C2 and DES. The license information, which is information on license for the music contents, contains, e.g., URL of a website for selling licenses. The event information, which is information on an event of the artist of the music contents, contains event period, event hall and the like. The event hall may contain position information such as a latitude and a longitude that can be afforded as input of a destination to a navigation system, in addition to user-readable information such as an address. Other information related to the music contents is contained.

When receiving a request to acquire a license from the user terminal 1300 to communicate with, the license server 1200 provides the license if the user terminal is within the event hall. In the present embodiment, the acquisition of a license denotes that information about permission to render music contents is acquired. The request acquisition part 701 receives a request to acquire a license. The situation information acquisition part 101 of the license server 1200 receives GPS information as one piece of position information of the user terminal 1300 and base station information from the communications channel 401 as other position information of the user terminal 1300. The GPS information received from the user terminal 1300 is sent to the location server, where position detection computation is performed to receive position information of the user terminal 1300. The condition acquisition part 601 acquires information for providing a license from the service selection information database 1201. In the present embodiment, information for providing a license includes a condition for providing a license that "the user terminal must exist within an event hall for the period of the artist's event", and information related to it such as an event period and position information of an event hall. The determining part 102 determines whether a license may be provided, from situation information acquired in the situation information acquisition part 101. To provide a license, the service information acquisition part 103 acquires the license itself from the service information database 1202. The execution part 104 provides a license to the user terminal 1300 via the communications channel 401 and performs accounting on license sale together with an accounting server 1500.

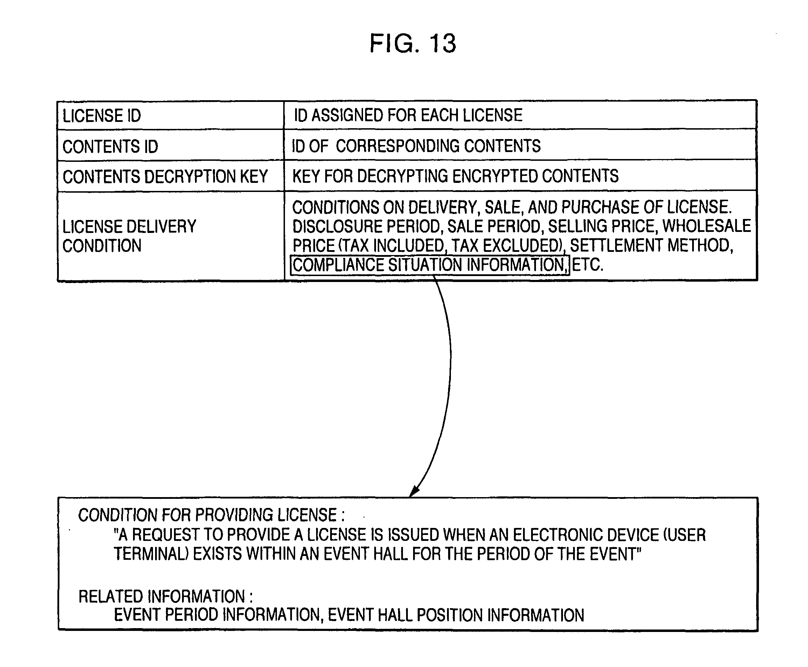

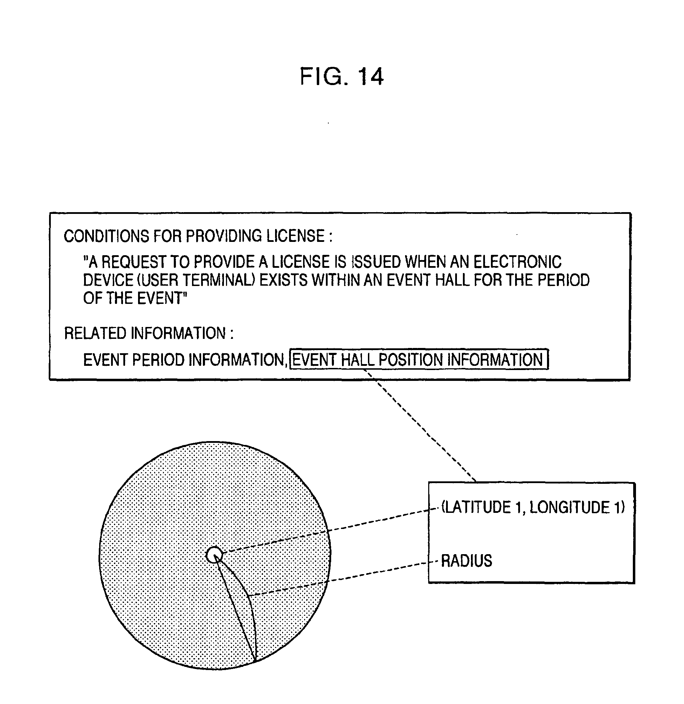

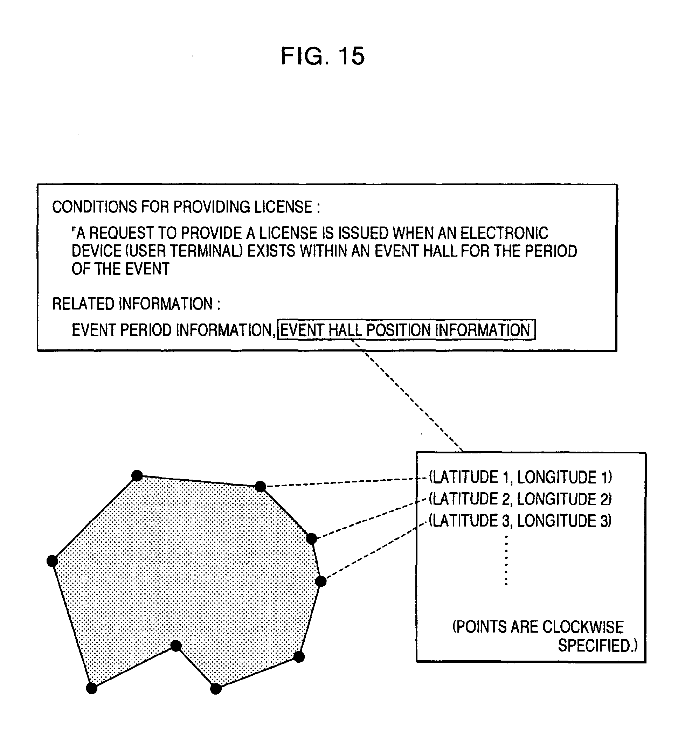

FIG. 13 shows the contents of a license provided. The license consists of license ID, contents ID, contents decryption key, and license delivery conditions. The license ID is an ID assigned for each license. The contents ID is the ID of corresponding contents and one license may correspond to plural contents. The contents decryption key is a key used to decrypt corresponding encrypted contents. The license delivery conditions are conditions on license sale and purchase, and includes a sale period, a settlement method, complying situation information (hereinafter referred to as compliance situation information) and the like. The compliance situation information is a condition for providing a license and information related to it; the condition for providing a license is that "an electronic device (user terminal) requesting a license requests license provision when it is within an event hall for the period of the event", and related information is event period information and event hall position information. The event hall position information is described by the latitude and longitude at the central position of an assumed circle and its radius, as shown in FIG. 14, or by a clockwise point string of latitudes and longitudes for an assumed polygon, as shown in FIG. 15.

The user terminal 1300 is a portable terminal which acquires music contents from the contents server 1100, acquires a license from the license server 1200, and decrypts and renders the music contents. The situation information acquisition part 101 receives GPS information from the GPS satellites 1600. The encryption situation information output part 1301 encrypts and outputs GPS information acquired in the situation information acquisition part 101. The contents acquisition part 1302 acquires music contents. The execution part 104 outputs a request to acquire a license to acquire the license. It also outputs accounting information about license purchase. It also decrypts and renders music contents by a decryption key included in the license. The acquired music contents and license may be stored in the storage medium 1303. The storage medium 1303 may be removed from the user terminal 1300.

The communications channel 401 is a communications channel between the contents server 1100 and the user terminal 1300, and between the license server 1200 and the user terminal 1300, and includes a situation information management part 2801. The situation information management part 2801 detects and outputs the position of the user terminal from base station information used for communication with the user terminal 1300.

The GPS satellites 1600 are satellites for sending GPS information, and GPS information from four or more GPS satellites is received in the user terminal 1300 so that the position of the user terminal 1300 can be detected by performing position detection computation. In FIG. 11, the position detection computation is performed in the location server 1400. The accounting server 1500 performs accounting on license sale.

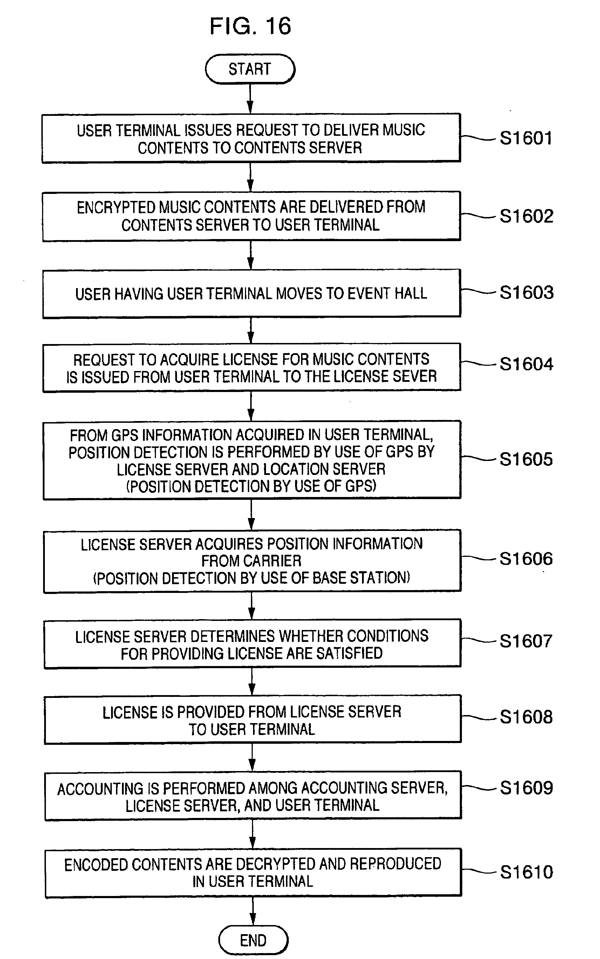

FIG. 16 is a flowchart for explaining processing in the present embodiment. In step S1601, the user terminal 1300 issues a request to deliver music contents to the contents server 1100. In step 1602, encrypted music contents are delivered from the contents server 1100 to the user terminal. In step S1603, it is assumed that a user having the user terminal 1300 moves to the event hall. In step S1604, a request to acquire a license for the music contents is issued from the user terminal 1300 to the license server 1200. In step S1605, from GPS information acquired in the user terminal 1300, position detection is performed by the license server 1200 and the location server 1400, that is, position detection by use of GPS is performed. In step S1606, the result of detecting the position of the user terminal 1300 by use of a base station is acquired through the communications channel 401 by the license server 1200. In step S1607, the license server 1200 determines whether conditions for providing the license are satisfied. In step S1608, the license is provided from the license server 1200 to the user terminal 1300. In step 1609, accounting is performed among the accounting server 1500, the license server 1200, and the user terminal 1300. In step S1610, encrypted contents are decrypted and rendered in the user terminal 1300.

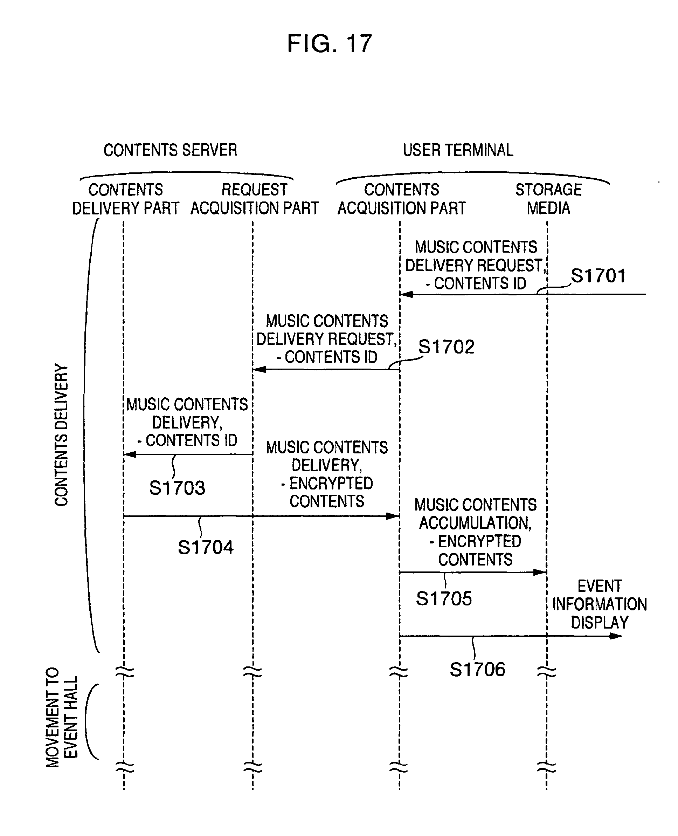

FIGS. 17 to 20 show communication sequences for explaining the operation of the present embodiment. Steps S1701 to S1706 of FIG. 17 correspond to contents delivery processing from steps S1601 to S1602 of FIG. 16. In step S1701, the user specifies a contents ID to issue a request to deliver music contents to the contents acquisition part 1302 of the user terminal 1300. In step S1702, the contents acquisition part 1302 of the user terminal 1300 specifies the contents ID to issue a request to deliver music contents to the request acquisition part 701 of the contents server 1100 via the communications channel 401. In step S1703, the request acquisition part 701 of the contents server 1100 specifies the contents ID to issue a request to deliver music contents to the contents delivery part 1101 of the contents server 1100. In step S1704, the contents delivery part 1101 of the contents server 1100 reads encrypted music contents from the contents database 1102 and delivers the encrypted music contents to the contents acquisition part 1302 of the user terminal 1300 via the communications channel 401. In step 1705, the encrypted music contents are stored in the storage medium 1303 of the user terminal 1300 from the contents acquisition part 1302 of the user terminal 1300. In step 1706, the contents acquisition part 1302 of the user terminal 1300 reads event information from the encrypted music contents and presents it to the user. After execution of the steps S1701 to S1706, the user moves to the event hall, carrying the user terminal 1300.

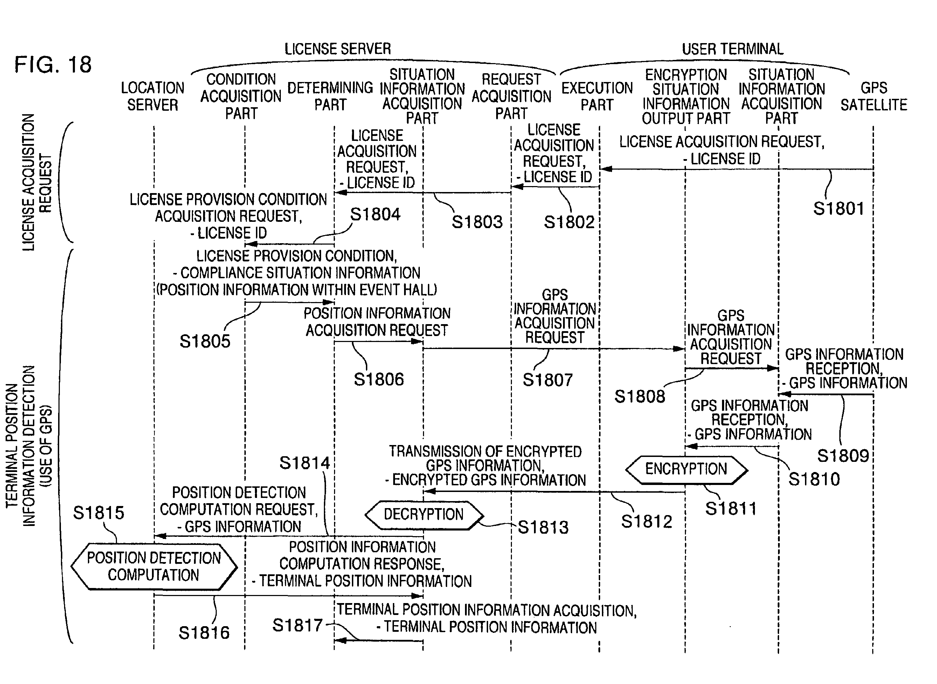

Steps S1801 to S1804 of FIG. 18 correspond to a license acquisition request to the license server 1200 from the user terminal 1300 of step S1604 of FIG. 16. In step S1801, the user specifies a license ID to issue a request to acquire a license to the execution part 104 of the user terminal 1300. In step S1802, the execution part 104 of the user terminal 1300 specifies the license ID to issue a request to acquire a license to the request acquisition part 701 of the license server 1200 via the communications channel 401. In step S1803, the request acquisition part 701 of the license server 1200 specifies the license ID to issue a request to acquire a license to the determining part 102 of the license server 1200. In step S1804, the determining part 102 of the license server 1200 specifies the license ID to issue a request to acquire a condition for providing the license to the condition acquisition part 601 of the license server 1200.

Steps 1805 to 1817 of FIG. 18 correspond to processing for detecting the position of the user terminal 1300 by use of GPS of step S1605 of FIG. 16. In step S1805, the condition acquisition part 601 of the license server 1200 reads a condition for providing a license from the service selection information database 1201 and sends it to the determining part 102 of the license server 1200. The condition for providing a license is information shown in the lower portion of FIG. 13 and includes event hall position information. In step S1806, the determining part 102 of the license server 1200 sends a position information acquisition request to the situation information acquisition part 101 of the license server 1200. In step S1807, the situation information acquisition part 101 of the license server 1200 sends a GPS information acquisition request to the encryption situation information output part 1301 of the user terminal 1300 via the communications channel 401. In step S1808, the encryption situation information output part 1301 of the user terminal 1300 sends the GPS information acquisition request to the situation information acquisition part 101 of the user terminal 1300. In step S1809, GPS information from the four or more GPS satellites 1600 is received in the situation information acquisition part 101 of the user terminal 1300.

In step S1810, the situation information acquisition part 101 of the user terminal 1300 sends the GPS information to the encryption situation information output part 1301 of the user terminal 1300. In step S1811, the encryption situation information output part 1301 of the user terminal 1300 encrypts the GPS information using a public key of the license server 1200. In step S1812, the encryption situation information output part 1301 of the user terminal 1300 sends the encrypted GPS information to the situation information acquisition part 101 of the license server 1200. In step S1813, the situation information acquisition part 101 of the license server 1200 decrypts the encrypted GPS information using a private key of the license server 1200. In step S1814, the situation information acquisition part 101 of the license server 1200 sends a position detection computation request together with the GPS information to the location server 1400. In step S1815, the location server 1400 performs position detection computation, based on the GPS information. In step S1816, the location server 1400 sends position information of the user terminal 1300 to the situation information acquisition part 101 of the license server 1200. In step S1817, the situation information acquisition part 101 of the license server 1200 sends the position information of the user terminal 1300 to the determining part 102 of the license server 1200.

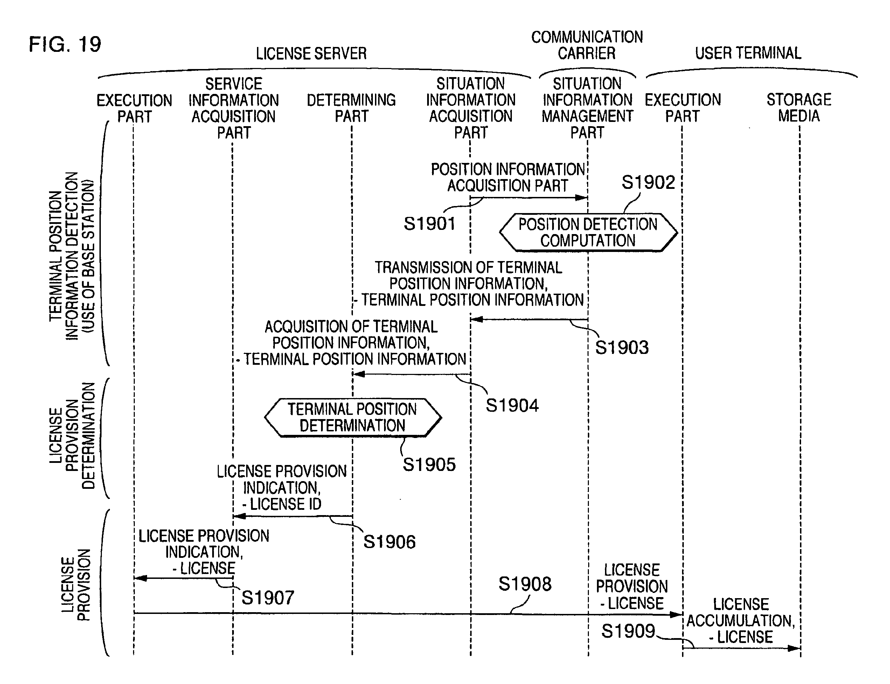

Steps 1901 to 1904 of FIG. 19 correspond to processing for detecting the position of the user terminal 1300 by use of a base station of step S1606 of FIG. 16. In step S1901, the situation information acquisition part 101 of the license server 1200 sends a position information acquisition request to the situation information management part 2801 of the communications channel 401. In step S1902, the situation information management part 2801 of the communications channel 401 performs position detection computation of the user terminal 1300 using information of a base station with which it communicates. In step S1903, the situation information management part 2801 of the communications channel 401 sends position information to the situation information acquisition part 101 of the license server 1200. In step S1904, the situation information acquisition part 101 of the license server 1200 sends the position information of the user terminal 1300 to the determining part 102 of the license server 1200. Step S1905 of FIG. 19 corresponds to processing for determination about whether a condition for providing a license is satisfied, of step S1607 of FIG. 16. In step S1905, the determining part 102 of the license server 1200 computes the position of the user terminal 1300 from the result of detecting the position of the user terminal 1300 by use of GPS, obtained in step S1817, and the result of detecting the position of the user terminal 1300 by use of the base station, obtained in step S1904, further determines whether the user terminal 1300 exists within the event hall, from the position information of the event hall, obtained in step S1805, and proceeds to subsequent steps if so. Steps 1906 to 1909 of FIG. 19 correspond to license provision from the license server 1200 to the user terminal 1300 of step S1608 of FIG. 16. In step S1906, the determining part 102 of the license server 1200 specifies a license ID to issues a license provision indication to the service information acquisition part 103 of the license server 1200. In step S1907, the service information acquisition part 103 of the license server 1200 reads a license having the specified license ID from the service information database 1202, and passes it to the execution part 104 of the license server 1200 to issue a license provision indication. In step S1908, the execution part 104 of the license server 1200 provides the license to the execution part 104 of the user terminal 1300 via the communications channel 401. In step S1909, the execution part 104 of the user terminal 1300 stores the license in the storage medium 1303 of the user terminal 1300.

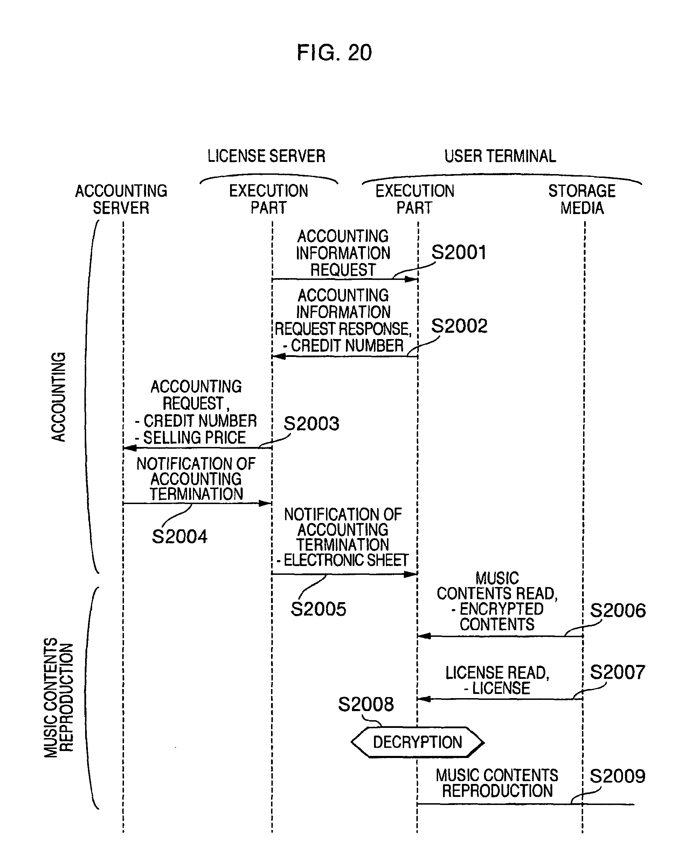

Steps S2001 to S2005 of FIG. 20 correspond to accounting of step S1609 of FIG. 16. In step S2001, the execution part 104 of the license server 1200 sends an accounting information request to the execution part 104 of the user terminal 1300 via the communications channel 401. In step S2002, the execution part 104 of the user terminal 1300 sends a credit number and other accounting information to the execution part 104 of the license server 1200 via the communications channel 401. In step S2003, the execution part 104 of the license server 1200 sends the user's credit number and the selling price of the provided license to the accounting server 1500 to request accounting. In step S2004, the accounting server 1500 performs accounting and notifies the execution part 104 of the license server 1200 that accounting terminates. In step S2005, the execution part 104 of the license server 1200 sends an electronic receipt to the execution part 104 of the user terminal 1300 via the communications channel 401 to notify the termination of accounting. Steps S2006 to S2009 of FIG. 20 correspond to the decryption and rendering of music contents in step S1610 of FIG. 16. In step S2006, the execution part 104 of the user terminal 1300 reads the encrypted music contents from the storage medium 1303 of the user terminal 1300. In step S2007, the execution part 104 of the user terminal 1300 reads the license from the storage medium 1303 of the user terminal 1300. In step S2008, the execution part 104 of the user terminal 1300 gets a contents decryption key from the license and decrypts the encrypted music contents. In step S2009, the execution part 104 of the user terminal 1300 renders the music contents.

Although, in the present embodiment, the contents server 1100, the license server 1200, the location server 1400, and the accounting server 1500 all operate as separate servers, all or some of these may be configured with an identical electronic device. The contents database 1102 may exist in the contents server 1100. The service selection information database 1201 and the service information database 1202 may exist in the license server 1200. The location server 1400 may exist at the side of the user terminal 1300, not at the side of the license server 1200 so that the location server 1400 performs position detection computation from GPS information received in the user terminal 1300 and sends the result to the license server. The location server 1400 may exist within the communications channel 401 so that the location server 1400 performs position detection computation from GPS information received in the user terminal 1300 and sends the result to the license server. Although, in the present embodiment, a post-accounting system, which performs accounting after license provision, is used, a pre-accounting system, which performs accounting before license provision, may be used.

According to such an embodiment of the present invention, the license server 1200 acquires position information of the user terminal 1300 with which it communicates, whereby services appropriate for the position of the user terminal 1300, particularly, special services permitted for only the user terminal 1300 at some specific positions can be provided.

Furthermore, the user terminal 1300 sends encrypted GPS information to the license server 1200, thereby making it possible to prevent the leak of privacy information such as the place of the user terminal 1300. Besides the present embodiment, for example, in the case where the situation information acquisition part 101 and the determining part 102 are placed in different electronic devices without being placed in an identical electronic device, situation information acquired in the situation information acquisition part 101 must be sent to the determining part 102 of a different electronic device. However, if the situation information were sent without being encrypted, it could be illegally acquired by third parties, in which case privacy information such as the place of the electronic device and its owner would leak. Accordingly, the situation information, without being sent directly to the determining part 102 from the situation information acquisition part 101, is encrypted and sent through the encryption situation information output part. Also, even in the case where the situation information acquisition part 101 and the determining part 102 are placed in an identical electronic device, for example, if history information about the positions in which the electronic device existed previously is stored and the determining part 102 determines the stored history information as situation information, the movement process of the electronic device can be known from the history information, so that privacy information would leak. Accordingly, situation information acquired in the situation information acquisition part 101 is encrypted by the encryption situation information output part and stored, thereby making it possible to prevent the information from leaking.

Furthermore, encrypted GPS information of the user terminal 1300 acquired by the license server 1200 makes it possible to prevent an act that a false position is given to receive a service that would not be received unless the user terminal 1300 exists in a specific position. Besides the present embodiment, for example, if situation information is information outputted from an IC card owned by the owner of the electronic device 100, encrypting the information outputted from the IC card would make it possible to prevent the IC card from being tampered. Encrypting position information makes it possible to prevent an act that a false position is given to receive a service that would not be received unless the electronic device 100 exists in a specific position.

Furthermore, to detect the position of the user terminal 1300, the license server 1200 combines information obtained from plural information sources such as base station information obtained from the communications channel 401 and GPS information obtained from the user terminal 1300 and confirms that the two types of position information match before determining position information. Thereby, highly reliable and highly accurate situation information can be acquired to execute services. Since position information obtained from the intensity of radio waves from ground stations and position information obtained from GPS are different in error range, the word "match" does not denote exactly the same; an error range is taken into account for each information source for a determination of match.

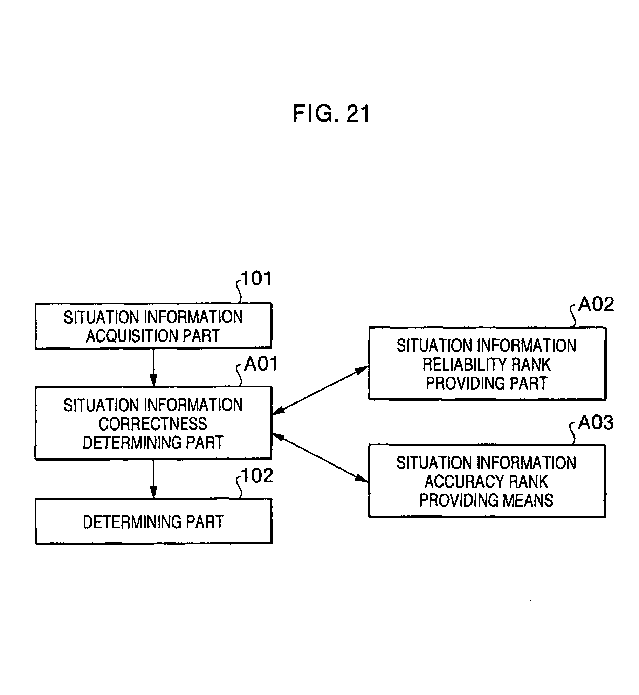

The correctness of situation information achieved by the encryption of the situation information and comparison of plural pieces of situation information may be determined by further providing a situation information correctness determining part A01 between the situation information acquisition part 101 and the determining part 102 as shown in FIG. 21 to determine the correctness of situation information acquired in the situation information acquisition part 101. Also, a reliability rank providing means A02 and an accuracy rank providing means A03 may be further provided to determine the correctness of situation information, using the result of ranking the reliability of the situation information and the result of ranking the accuracy of the situation information.

The reliability of situation information indicates the degree of protection of situation information acquired in the situation information acquisition part 101 against tampering or impersonation by malicious third parties or malicious users of user terminals. In other words, a higher reliability rank denotes a lower possibility of tampering, impersonation and the like; for example, with a lower possibility, GPS information of the user terminal 1300 can be tampered by a malicious third party in the process of transmission to the license server 1200, or impersonation can be made by a malicious user as if he (or she) were in a specific position by giving a false position.

The reliability rank providing means may provide a reliability rank, based on a source of situation information, a situation information acquisition route, or a combination of a source of situation information and a situation information acquisition route. A source of situation information referred to here denotes from where the situation information and information necessary to measure and compute the situation information were obtained, where the situation information was measured, and where the situation information was computed; position information based on GPS information of the present embodiment is obtained from GPS satellite 1600, the user terminal 1300, the location server 1400, etc., and position information based on base station information is obtained from the carrier 401, etc. Since impersonation may be made by a malicious user in the user terminal 1300, if the user terminal 1300 is included in information sources, a reliability rank becomes low. A situation information acquisition route denotes a transmission route from an information source to the situation information acquisition part 101; position information based on GPS information of the present embodiment is obtained through a transmission route among the GPS satellite 1600, the user terminal 1300, the carrier 401, and the license server 1200, etc., and position information based on base station information is obtained through a transmission route between the carrier 401 and the license server 1200, etc. Since impersonation may be made by a malicious user in the user terminal 1300, if the user terminal 1300 is included in acquisition routes, a reliability rank becomes low.

The reliability rank providing means may provide a reliability rank, based on the encryption of situation information. For example, electronic signature such as PKI (Public Key Infrastructure) and encryption techniques are used to prevent tampering on data transmission routes and assure a receiving side that a sending side is a principal. Position information based on base station information of the present embodiment becomes higher in reliability rank by adding electronic signature of the carrier 401 to situation information.

The accuracy of situation information indicates the degree of approximation to real situation information in terms of measurement and computation of situation information acquired in the situation information acquisition part 101. The accuracy rank providing means provides an accuracy rank, based on a source of situation information. A source of situation information referred to here denotes a method for measuring and computing the situation information; position information based on GPS information of the present embodiment has an error of several meters, while position information based on base station information has an error of several hundred meters. Position information with a smaller error is given a higher accuracy rank.

The situation information correctness determining part determines the correctness of situation information from a situation information reliability rank provided by the reliability rank providing means, a situation information accuracy rank provided by the accuracy rank providing means, determination about whether plural pieces of situation information acquired by plural information sources match as a result of comparing them, or a combination of them. To detect the position of the user terminal 1300 of the present embodiment, situation information obtained from plural information sources is used. By combining position information which is based on base station information obtained from the communications channel 401 and is high in reliability rank but low in accuracy rank with position information which is based on GPS information obtained from the user terminal 1300 and is low in reliability rank but high in accuracy rank, and confirming that the obtained pieces of position information match before determining the position information, highly reliable and highly accurate situation information can be acquired.

A license in the present embodiment is a license for making contents executable or reproducible. The separate deliveries of contents and license enable the separation between license providers and contents provides. Licenses can be delivered according to situation information; for example, contents are sold in a state in which they are stored in storage media, and subsequently a license may be obtained according to situation information to execute the contents. Furthermore, by use of licenses as electronic tickets and electronic values, various services can be accommodated besides contents delivery.

Furthermore, by encrypting and delivering contents, security in the process of delivery can be maintained and illegal copying after delivery can be prevented. Furthermore, contents are stored in encrypted form, a contents decryption key is included in a license, and the contents are decrypted by the contents decryption key only when the contents are executed. Thereby, the contents can be executed only in the user terminal 1300, so that illegal use of the contents can be prevented.

Furthermore, the user terminal 1300, which acquires music contents before acquiring a license, reads license information and event information contained in the contents, and supplies the user with information for acquiring the license which indicates that "This is music contents of artist XXXX. If you want to acquire a license, please go to the following event hall and make access to URL of XXX". By this arrangement, the advance delivery of the contents yields the advertising effectiveness for acquiring the license.

The license in the present embodiment can be acquired only when the condition that the user terminal 1300 exists within a specific event hall is satisfied, and in some cases may be acquired on a chargeable basis. In contrast, contents are placed on a website of the artist and can be downloaded at no charge so that users browsing the website can freely download the contents. By thus making contents delivered in advance easily acquirable to users and including recommendation information for recommending the acquisition of a license related to the contents in the contents, the advertising effectiveness for acquiring the license to be delivered later will be increased.

By storing not only current values of position information but also past states thereof as situation information, a position detection error decreases, as a result of which it can be determined more correctly whether the user terminal is within the event hall, or the license can be provided to only those who entered the event hall a given number of times or more.

In addition to the provision of a license, a license already held can be updated or canceled by situation information of the user terminal. For example, by use of service information as information for canceling licenses, the licenses can be canceled upon exit from Japan and the management of copyrights by country is facilitated. By use of service information as information for updating licenses, the licenses can be updated upon entrance to a specific concert place, making it possible to promote entrance to event halls.

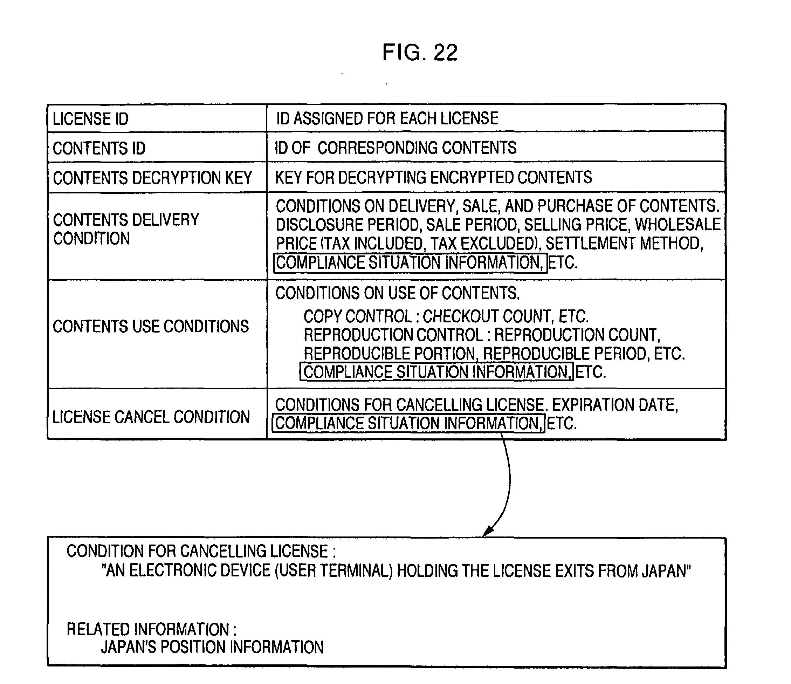

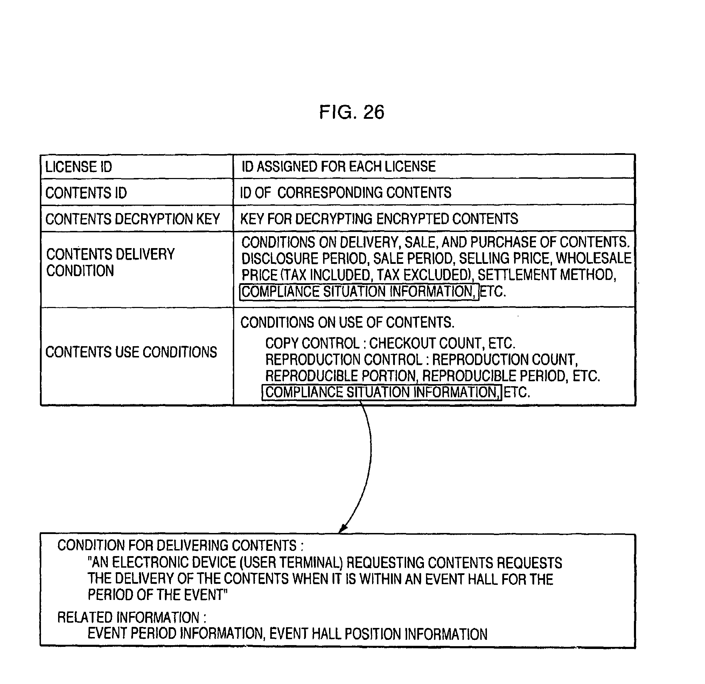

FIG. 22 shows the contents of a license at the time of canceling the license. In this example, conditions for canceling the license are added to license contents of FIG. 26. The license cancellation conditions include a license expiration date, compliance situation information and the like. The compliance situation information is information related to situation information of the condition for canceling the license, the license cancellation condition is that "an electronic device (user terminal) holding the license exits from Japan", and related information is Japan's position information. Although, in this example, the license includes a cancellation condition of its own, a condition for canceling another license may be included by specifying a license ID and the like.

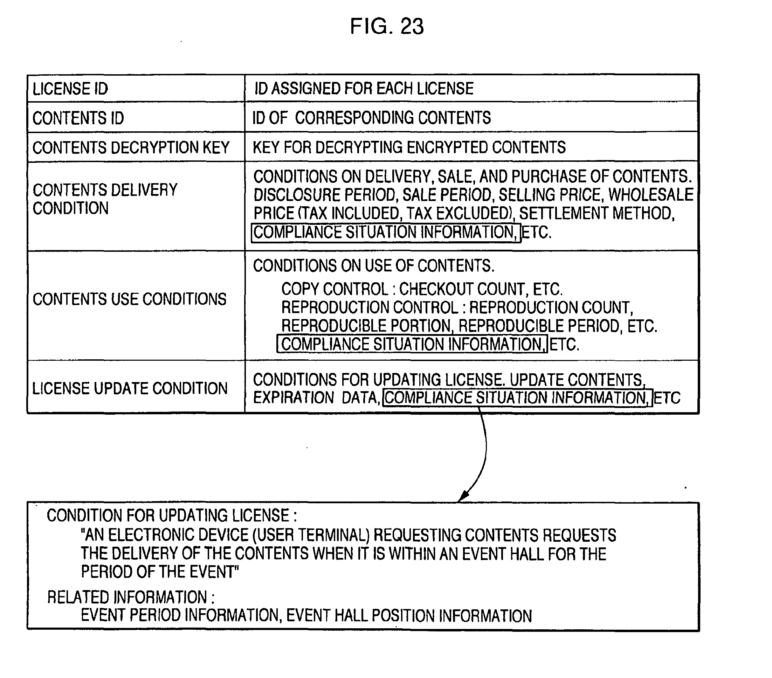

FIG. 23 shows the contents of a license at the time of updating the license. In this example, conditions for updating the license are added to the license contents of FIG. 26. The license update conditions include update contents, a license expiration date, compliance situation information and the like. The compliance situation information is information related to situation information of the condition for updating the license, the license update condition is that "an electronic device (user terminal) using contents requests the use of the contents when it is within an event hall for the period of the event", and related information is event period information and event hall position information. The license is updated according to information of update contents; for example, an expiration date is extended. Although, in this example, the license includes an update condition of its own, conditions for updating another license may be included by specifying a license ID and the like.

For one license corresponding to plural special information contents on, e.g., an artist instead of a license for music contents, if a user terminal has acquired the license before acquiring contents, once the license is purchased, subsequently the special information contents can be acquired as required for the duration of a specified period.

If information for providing a license is acquired before contents are acquired, and the information is presented to users, it can be avoided that only contents are acquired but the license cannot be acquired. As another method of avoiding a situation in which the license has been provided but contents are not provided, after presenting information for providing the license, the contents delivery part delivers contents covered by the license.

### (Fourth embodiment)

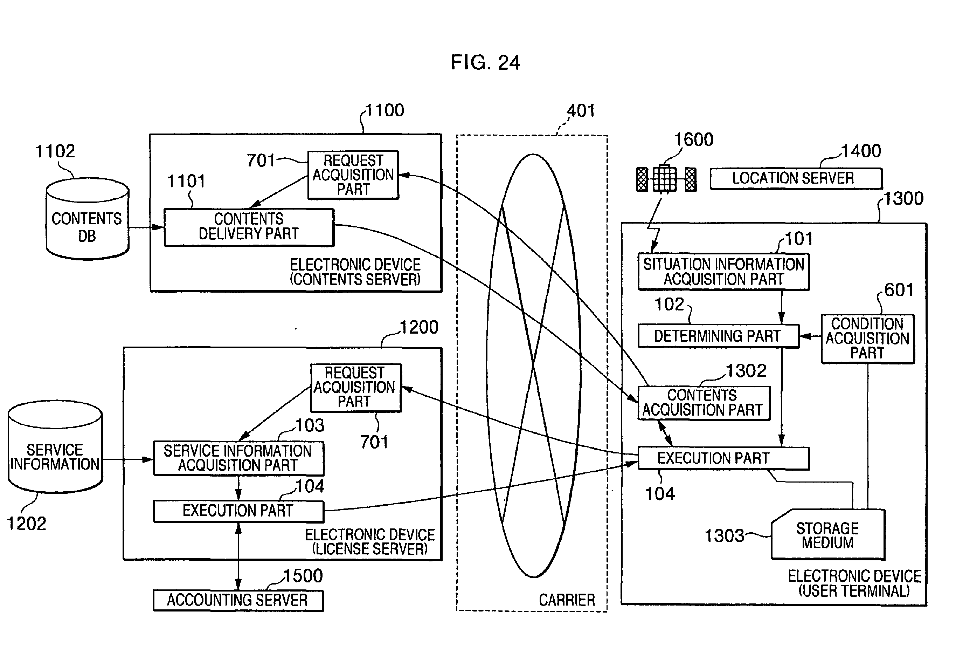

FIG. 24 shows a functional block diagram of an electronic device in a fourth embodiment of the present invention. The present embodiment is different from the third embodiment in that a license is acquired before acquiring contents. In the present embodiment, video contents are used as an example of contents. That is, the present embodiment relates to the delivery of contents limited to an event hall; a user acquires a license for video contents of an artist by a terminal of his (her) own, and then moves to an event hall of the artist to subject the video contents to streaming rendering. The video contents are delivered to only terminals within the event hall. In FIG. 24, the reference numeral 1100 designates an electronic device which is a contents server for delivering video contents; 1200, an electronic device which is a license server for providing licenses; and 1300, an electronic device which is a user terminal owned by a user. Between the contents server 1100 and the user terminal 1300, and between the license server 1200 and the user terminal 1300, communication is conducted via a communications channel 401. In the contents server 1100, 701 designates a request acquisition part; 1101, a contents delivery part; and 1102, a contents database. In the license server 1200, 103 designates a service information acquisition part; 104, an execution part; 701, a request acquisition part; and 1202, a service information database. In the user terminal 1300, 101 designates a situation information acquisition part; 102, a determining part; 104, an execution part; 601, a condition acquisition part; 1302, a contents acquisition part; and 1303, a storage medium. Moreover, 1400 designates a location server; 1500, an accounting server; and 1600, GPS satellites.

The contents server 1100 is the same as the contents server 1100 of the third electronic device 100, except that it has contents of video data intended for streaming.

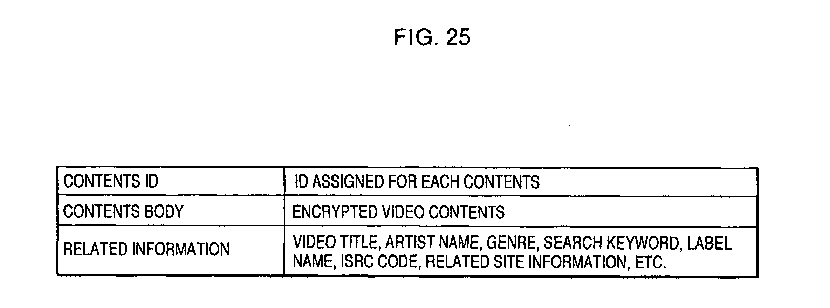

FIG. 25 shows the contents of video contents. In this example, video contents consist of contents ID, contents body, and related information. The contents ID is an ID assigned for each contents. The contents body is video data encrypted according to an algorithm such as, e.g., C2 and DES. The license server 1200 having information related to video contents provides licenses according to requests. The request acquisition part 701 receives license acquisition requests. The service information acquisition part 103, to provide licenses, acquires the licenses themselves from the service information database 1202. The execution part 104 provides licenses to the user terminal 1300 via the communications channel 401 and performs accounting on the sale of licenses together with the accounting server 1500.

FIG. 26 shows the contents of a license. In this example, the license consists of license ID, contents ID, contents decryption key, contents delivery conditions, and contents use conditions. The license ID is an ID assigned for each license. The contents ID is the ID of corresponding contents, and one license may, in some cases, correspond to plural contents. The contents decryption key is a key used to decrypt corresponding encrypted contents. The contents delivery conditions are conditions on contents delivery, sale, and purchase, and include a sale period, settlement method, compliance situation information and the like. The contents use conditions are conditions on the use of contents, and include copy control, rendering control, compliance situation information and the like. The compliance situation information is information related to situation information of conditions for using contents; the condition for providing contents is that "an electronic device (user terminal) using the contents requests contents use when it is within an event hall for the period of the event", and related information is event period information and event hall position information. The event hall position information is described as shown in FIGS. 14 and 15, as in the third embodiment.

The user terminal 1300 is a portable terminal which acquires a license from the license server 1200, acquires video contents from the contents server 1100, and decrypts and renders the video contents if the user terminal 1300 is within an event hall. The situation information acquisition part 101 receives GPS information from the GPS satellites 1600 and sends it to the location server, where position detection computation is performed to receive position information of the user terminal 1300. The condition acquisition part 601 acquires information for using contents from the storage medium 1303. In the present embodiment, information for using contents is a condition for using the contents which indicates that "a user terminal must be within an event hall for the period of the event", and information related to it such as an event period and the position information of the event hall. The determining part 102 determines whether the use of contents is permitted, from situation information acquired in the situation information acquisition part 101. The execution part 104 acquires information for acquiring and using contents from the storage medium 1303. It also issues a contents acquisition request to the contents acquisition part 1302 to acquire contents. It also outputs accounting information on license purchase. It also decrypts and renders video contents by a decryption key included in a license. The contents acquisition part 1302 acquires video contents from the contents server 1100. The storage medium 1303 stores acquired licenses. The storage medium 1303 may be removable from the user terminal 1300.

The communications channel 401, GPS satellites 1600, location server 1400, and accounting server 1500 are the same as those in the third embodiment. However, the situation information management part 2801 of the communications channel 401 in the third embodiment may not exist in the present embodiment.

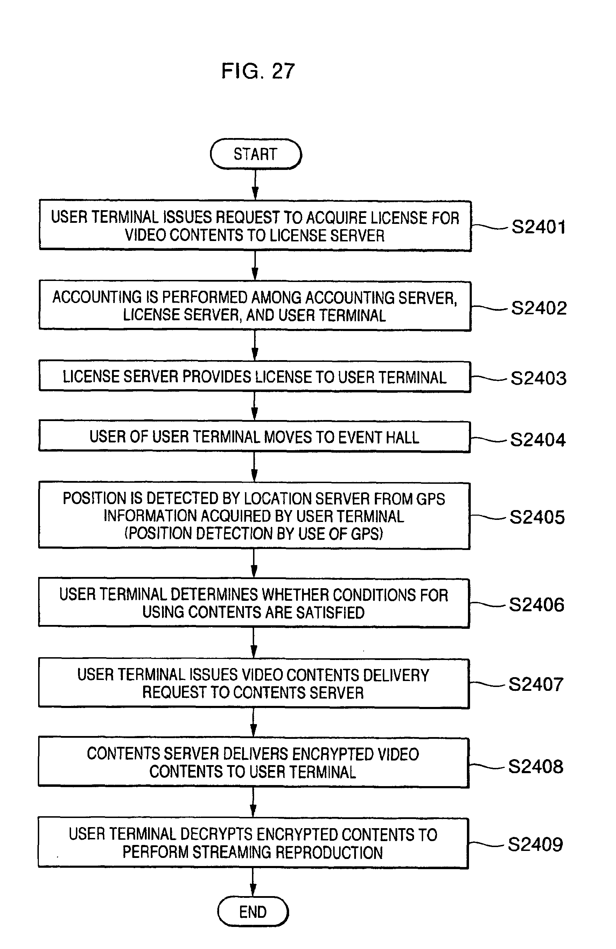

FIG. 27 is a flowchart for explaining processing in the present embodiment. In step S2401, the user terminal 1300 issues a request to acquire a license for video contents to the license server 1200. In step S2402, accounting is performed among the accounting server 1500, the license server 1200, and the user terminal 1300. In step S2403, the license server 1200 provides a license to the user terminal 1300. In step S2404, the user of the user terminal 1300 moves to an event hall. In step S2405, a position is detected by the location server 1400 from GPS information acquired by the user terminal 1300, that is, position detection by use of GPS is performed. In step S2406, the user terminal 1300 determines whether conditions for using contents are satisfied. In step S2407, the user terminal 1300 issues a video contents delivery request to the contents server 1100. In step S2408, the contents server 1100 delivers encrypted video contents to the user terminal. In step S2409, the user terminal 1300 decrypts the encrypted contents to perform streaming rendering.

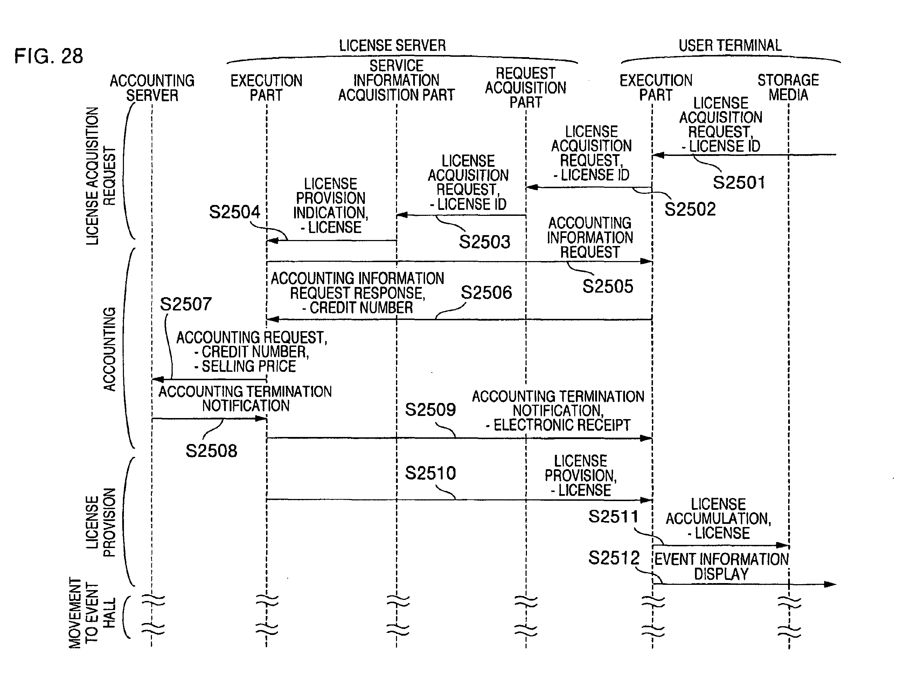

FIGS. 28 to 30 show communication sequences for explaining the operation of the present embodiment. Steps S2501 to 2504 of FIG. 28 correspond to the license acquisition request of step S2401 of FIG. 27. In step S2501, the user specifies a license ID to issue a license acquisition request to the execution part 104 of the user terminal 1300. In step S2502, the execution part 104 of the user terminal 1300 specifies the license ID to issue a license acquisition request to the request acquisition part 701 of the license server 1200 via the communications channel 401. In step S2503, the request acquisition part 701 of the license server 1200 specifies the license ID to issue a license provision indication to the service information acquisition part 103 of the license server 1200. In step S2504, the service information acquisition part 103 of the license server 1200 reads a license having the specified license ID from the service information database 1202, passes it to the execution part 104 of the license server 1200, and issues a license provision indication. Steps S2505 to S2509 of FIG. 28 correspond to accounting of step S2402 of FIG. 27. In step S2505, the execution part 104 of the license server 1200 sends an accounting information request to the execution part 104 of the user terminal 1300 via the communications channel 401. In step S2506, the execution part 104 of the user terminal 1300 sends a credit number and other accounting information to the execution part 104 of the license server 1200 via the communications channel 401. In step S2507, the execution part 104 of the license server 1200 sends the user's credit number and the selling price of the provided license to the accounting server 1500 to request accounting. In step S2508, the accounting server 1500 performs accounting and notifies the execution part 104 of the license server 1200 that accounting terminates. In step S2509, the execution part 104 of the license server 1200 sends an electronic receipt to the execution part 104 of the user terminal 1300 via the communications channel 401 to indicate the termination of accounting. Steps S2510 to S2512 of FIG. 28 correspond to the license provision from the license server 1200 to the user terminal 1300 in step S2403 of FIG. 27. In step S2510, the execution part 104 of the license server 1200 provides a license to the execution part 104 of the user terminal 1300 via the communications channel 401. In step S2511, the execution part 104 of the user terminal 1300 stores the license in the storage medium 1303 of the user terminal 1300. In step S2512, the execution part 104 of the user terminal 1300 reads event information from the acquired license and presents it to the user. After termination of step S2512, the user moves to the event hall, carrying the user terminal 1300.

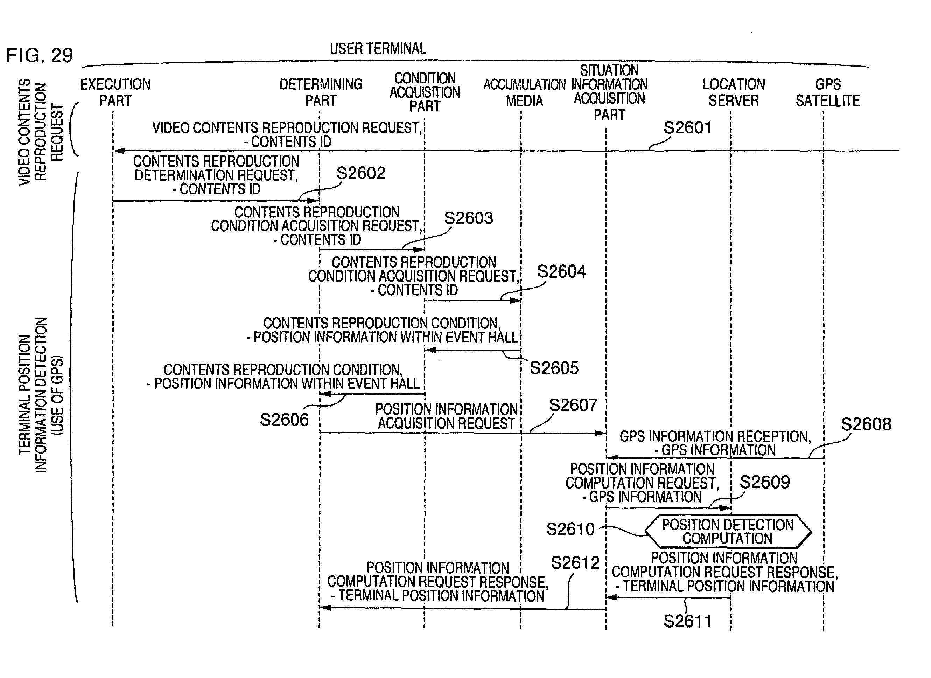

Steps S2601 to 2612 of FIG. 29 correspond to position detection processing for the user terminal 1300 by use of GPS in step S2405 of FIG. 27. In step S1701, the user specifies a contents ID to issue a video contents rendering request to the execution part 104 of the user terminal 1300. In step S2602, the execution part 104 of the user terminal 1300 specifies a contents ID to issue a contents rendering determination request to the determining part 102 of the user terminal 1300. In step S2603, the determining part 102 of the user terminal 1300 specifies a contents ID to issues a contents rendering condition request to the condition acquisition part 601 of the user terminal 1300. In steps S2604 and 2605, the condition acquisition part 601 of the user terminal 1300 reads a condition for rendering contents from the license stored in the storage medium 1303 of the user terminal 1300. In step S2606, the condition acquisition part 601 of the user terminal 1300 sends the condition for rendering contents to the determining part 102 of the user terminal 1300. The condition for rendering contents is information shown in the lower portion of FIG. 26 and includes position information of the event hall. In step S2607, the determining part 102 of the user terminal 1300 sends a position information acquisition request to the situation information acquisition part 101 of the user terminal 1300. In step S2608, the situation information acquisition part 101 of the user terminal 1300 receives GPS information from four or more GPS satellites 1600. In step S2609, the situation information acquisition part 101 of the user terminal 1300 sends a position detection computation request together with the GPS information to the location server 1400. In step S2610, the location server 1400 performs position detection computation from the GPS information. In step S2611, the location server 1400 sends position information of the user terminal 1300 to the situation information acquisition part 101 of the user terminal 1300. In step S2612, the situation information acquisition part 101 of the user terminal 1300 sends the position information of the user terminal 1300 to the determining part 102 of the user terminal 1300.

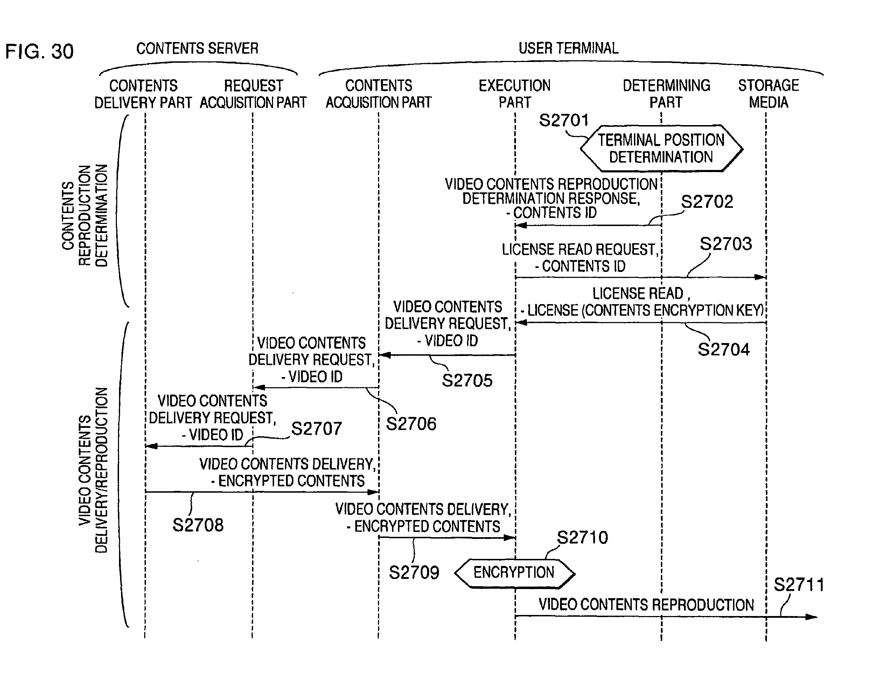

Steps S2701 to 2704 of FIG. 30 correspond to the determination processing about whether a condition for rendering contents is satisfied, in step S2406 of FIG. 27. In step S2701, the determining part 102 of the user terminal 1300 determines whether the user terminal 1300 is within the event hall, from the result of detecting the position of the user terminal 1300 by use of GPS, obtained in step S2612, and the position information of the event hall, obtained in step S2606, and proceeds to subsequent steps if it exists. In step S2702, the determining part 102 of the user terminal 1300 specifies a contents ID to send a video contents rendering determination response to the execution part 104 of the user terminal 1300. In steps S2703 and S2704, the execution part 104 of the user terminal 1300 gets a contents decryption key included in the license from the storage medium 1303 of the user terminal 1300. Steps S2705 to S2711 of FIG. 30 correspond to the video contents delivery request in step S2407 of FIG. 27, the encrypted video contents delivery in step S2408, and the video contents streaming rendering in step S2409. In step S2705, the execution part 104 of the user terminal 1300 specifies the contents ID to issue a video contents delivery request to the contents acquisition part 1302 of the user terminal 1300. In step S2706, the contents acquisition part 1302 of the user terminal 1300 specifies the contents ID to issue the video contents delivery request to the request acquisition part 701 of the contents server 1100 via the communications channel 401. In step S2707, the request acquisition part 701 of the contents server 1100 specifies the contents ID to issue the video contents delivery request to the contents delivery part 1101 of the contents server 1100. In step 2708, the contents delivery part 1101 of the contents server 1100 reads encrypted video contents from the contents database 1101 and delivers the encrypted video contents to the contents acquisition part 1302 of the user terminal 1300 via the communications channel 401. In step S2709, the contents acquisition part 1302 of the user terminal 1300 sends the encrypted video contents to the execution part 104 of the user terminal 1300. In step S2710, the execution part 104 of the user terminal 1300 decrypts the video contents using the contents decryption key acquired in step S2704. In step S2711, the execution part 104 of the user terminal 1300 subjects the video contents to streaming rendering.

Although, in the present embodiment, the contents server 1100, the license server 1200, the location server 1400, and the accounting server 1500 all operate as separate servers, all or some of these may be configured with an identical electronic device. The contents database 1102 may exist in the contents server 1100. The service information database 1202 may exist in the license server 1200. The location server 1400 may exist within the communications channel 401 so that the location server 1400 performs position detection computation from GPS information received in the user terminal 1300 and sends the result to the user terminal 1300. Although, in the present embodiment, a pre-accounting system, which performs accounting before license provision, is used, a post-accounting system, which performs accounting after license provision, may be used.

According to such an embodiment of the present invention, the user terminal 1300 acquires its own position information, whereby services appropriate for the position of the user terminal 1300, particularly, special services permitted for only the user terminal 1300 at some specific positions can be utilized.

The license in the present embodiment is a license for making contents executable or reproducible. The separate deliveries of the contents and the license enable the separation between license providers and contents providers. Also, contents can be produced according to situation information; for example, a license is sold in a state in which it is stored in storage media or the like, and subsequently contents may be acquired according to situation information to render the contents. By considering licenses as electronic tickets and electronic values and viewing the rendering of contents in the present embodiment as the use of electronic tickets and electronic values, various services can be accommodated besides contents delivery.

Furthermore, the user terminal 1300, which acquires music contents before acquiring a license and reads license information and event information contained in the contents, and supplies the user with information for acquiring the license which indicates that "This is a license for video contents of artist XXXX. If you want to acquire the video contents, please go to the following event hall and make access to URL of XXX". By this arrangement, the advance delivery of the license yields an advertising effect for acquiring the license.

The contents in the present embodiment can be acquired and rendered only when the condition that the user terminal 1300 exists within a specific event hall is satisfied. Instead of streaming rendering as in the present embodiment, if downloading rendering is performed and the data size of contents is large, it may take much time to download the contents. In contrast, if a license is placed on a website of the artist and, and the data size of the license is small, it often takes little time to acquire the license. By thus making a license delivered in advance easily acquirable to users and including recommendation information for recommending the acquisition of contents related to the license in the license, the advertising effectiveness for acquiring the contents to be delivered later will be increased.

By storing not only current values of position information but also past states thereof as situation information, a position detection error decreases, as a result of which it can be determined more correctly whether the user terminal is within the event hall, or video contents can be delivered to only those who entered the event hall a given number of times or more.

In addition to the acquisition of video contents, if the user terminal is within the event hall, a license already held can be updated or canceled.

### (Advanced versions of the embodiments)

The determining part 102 of the electronic device 100 may determine whether services can be executed, from information held in the electronic device 100. For example, if information about the sex of user terminal owners is held in the electronic device 100, when executing the service of providing information about neighboring stores, it can narrow the information to provide the service by determining whether to provide the store information, depending on the sex of owners. Information held in the electronic device 100 is not limited to sex; it may be age, annual income, whether the crystal liquid display of the electronic device 100 is capable of color display, or whether the electronic device 100 has a sound output means.

In the case where situation information acquired in the situation information acquisition part 101 of the electronic device 100 is line disconnection information, the electronic device 100 may further include a disconnection information transmission part. The line disconnection information is information indicating the state when a line is disconnected when the electronic device 100 is communicating; an example of the line disconnection information is information indicating how many bytes of a file have already been downloaded when a line is disconnected in the process of downloading of the file by the FTP protocol during communication by the Internet. The disconnection information transmission part sends line disconnection information acquired in the situation information acquisition part 101 to a communication party from which a line is disconnected. By providing such a disconnection information transmission part, when communication over a line is restored, restoration to a disconnection state becomes possible. In the case of file downloading by the FTP protocol, the downloading can be resumed from a remaining portion of the file having been downloaded until line disconnection.

In the case where situation information acquired in the situation information acquisition part 101 is the position information of the electronic device 100, the electronic device 100 may further include a broadcast station selection part which selects a broadcast station to be connected. By providing the broadcast station selection part, when the electronic device moves out of the service area of a broadcast station being currently watched, the broadcast station selection part selects a broadcast station of the same family which exists in a place obtained by position information, whereby the same broadcast can be watched without deterioration in a receive state.

The situation information acquisition part 101 may acquire position information of plural terminals as situation information and service information may be information for connecting neighboring terminals over communication, of acquired plural terminals. The "acquired plural terminals" here denote terminals the position information of which was acquired by the situation information acquisition part 101. The "service information" denotes service information acquired by the service information acquisition part 103; the service information in this case is information for connecting a terminal over communication the position information of which was acquired, for example, the IP address of the terminal. By use of such situation information and service information, communication can be made with terminals in the neighborhood of the electronic device 100; for example, meeting at a crowded place can be made smoothly by conducting communication with a terminal owned by a waiting party.

In such a case where situation information is acquired by plural means, the electronic device 100 includes a situation information correctness determining part for determining whether situation information matches; at a stage before the determining part 102 determines whether a service can be executed, whether situation information obtained by plural means matches is determined in the situation information correctness determining part. This increases the correctness of situation information obtained by the situation information acquisition part 101.

The electronic device 100 may have a communications channel switching part 101. The communications channel switching part switches communications channels according to situation information acquired by the situation information acquisition part. For example, when the electronic device 100 has a wireless channel of UHF band and a wireless channel of VHF band, the situation information acquisition part 101 obtains communication situations of these channels and the communications channel switching part makes determination from the communication situations to use a communications channel under better communication. By providing such a communications channel switching part, an optimum communications channel can be used.

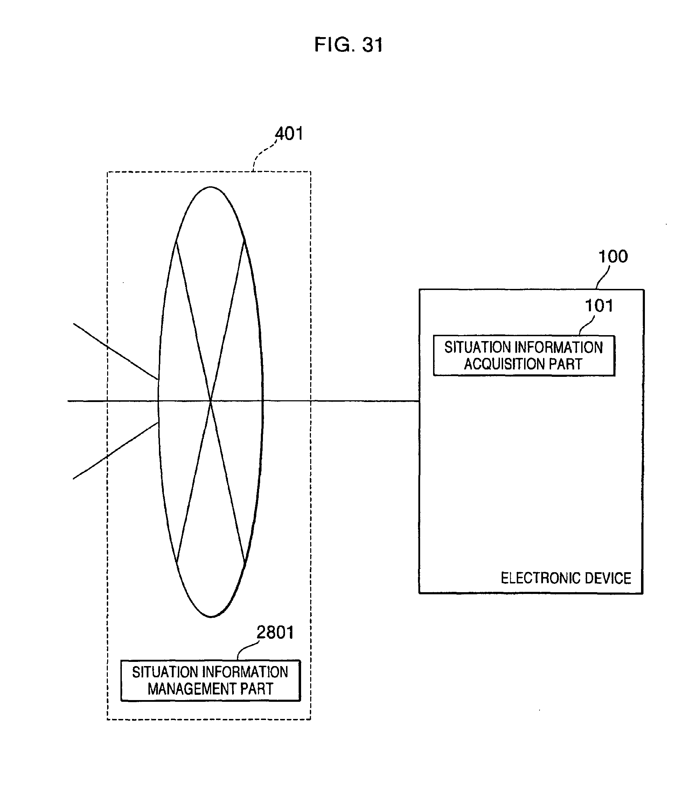

The above-described situation information is created or acquired as follows. Situation information created by a communications channel is, in some cases, acquired from the communications channel or, in other cases, from other than communications channels by the electronic device 100. FIG. 31 shows a case where the electronic device 100 is connected to the communications channel 401 and the situation information acquisition part 101 acquires situation information created by the communications channel from the communications channel 401. The situation information management part 2801 shown in FIG. 31 creates situation information on the communications channel 401 and sends it to the electronic device 100. Situation information created and sent by the situation information management part 2801 includes bands provided by a communications channel, communication speed (specification value and actually measured value), disconnection information indicating a situation at communication disconnection, communications traffic, and communication charge. If the electronic device 100 is a cellular phone, information of a base station being used and handover information are also created and sent by the situation information management part 2801. Furthermore, situation information of a communication party of the electronic device 100 may also be acquired by the situation information management part 2801 to send it to the electronic device 100. In this case, a base station used by the party can be listed as an example of situation information. Concrete examples of the situation information management part 2801 are facilities owned by telecommunication agencies (carriers), broadcast agencies, Internet service providers (ISP) and the like.

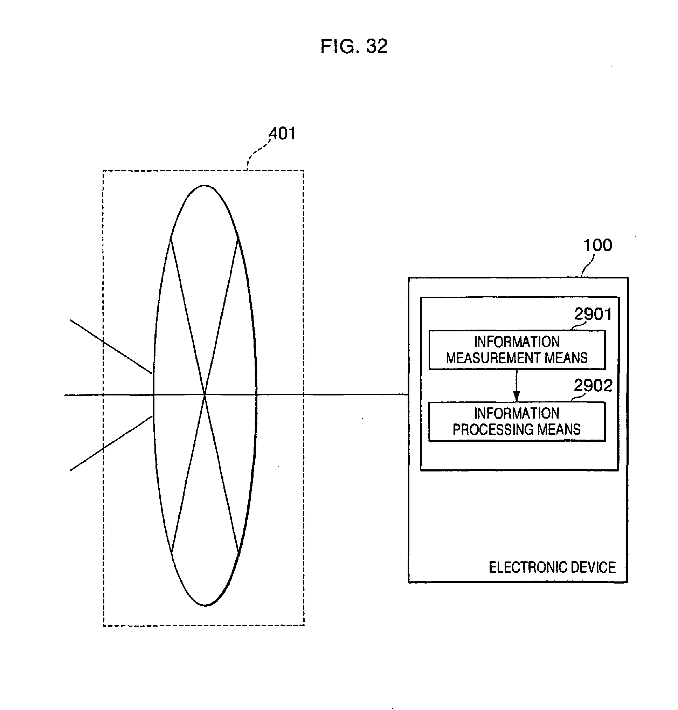

FIG. 32 shows a case where the electronic device 100 acquires situation information from other than a communications channel. In this case, the situation information acquisition part 101 includes an information measurement means 2901 for acquiring situation information itself or information for obtaining situation information, and an information processing means 2902 for extracting situation information from information acquired by the information measurement means 2901. Information for obtaining situation information, acquired by the information measurement means 2901, includes information obtained from radio waves transmitted from an artificial satellite of GPS. By processing this information by the information processing means 2902, position information of the electronic device 100 can be used as situation information. In the case where the information measurement means 2901 acquires situation information itself, the information processing means 2902 converts the acquired situation information into a format suitable for processing by the situation information acquisition part 101 or the like. Although, in FIG. 32, the information measurement means 2901 and the information processing means 2902 are within the situation information acquisition part 101, they may be outside the situation information acquisition part 101. They may also be outside the electronic device 100. For example, by placing the information processing means 2902 outside the electronic device 100, since information obtained from radio waves sent from an artificial satellite of GPS can be processed outside the electronic device 100, the electronic device 100 can be made compact and lightweight. Concrete examples in this case are communications between wireless tag and cellular phone, communications between cellular phones by Bluetooth, transceiver communications, contact communications, and the like.

FIGS. 31 and 32 are not in a relationship contradictory to each other; the situation information acquisition part 101 may acquire situation information at the same time from both the communications channel 401 and the information processing means 2902, and if the situation information is of identical type, correct situation information can be acquired by comparing the two pieces of situation information.

According to the present invention, first, there is provided an electronic device comprising: a situation information acquisition part; a determining part for determining whether a service can be executed, from situation information acquired in the situation information acquisition part; a service information acquisition part for acquiring service information, based on determination of the determining part; an execution part for executing acquired service information; and a situation information correctness determining part for determining the correctness of situation information acquired in the situation information acquisition part. Thereby, correct situation information can be acquired to provide services.

Second, situation information is acquired from plural means information sources to determine its correctness. Thereby, correct situation information can be acquired to provide services.

Third, the correctness of situation information is determined using a reliability rank provided based on combinations of information sources and information acquisition routes and/or an accuracy rank provided based on information sources. Thereby, correct situation information can be acquired to provide services.

Fourth, the electronic device is provided with: the situation information acquisition part; the determining part for determining whether a service can be executed, from situation information acquired in the situation information acquisition part; the service information acquisition; the execution part for executing service information; and a condition information acquisition part for, when the determining part determines that a service cannot be executed, acquiring service available information for the service to become available. Thereby, information sent to the electronic device, without being directly displayed, can be selectively displayed according to the situation of the electronic device, making it possible for the user to know what to do to make the service executable.

Fifth, certain service information is made to include recommendation information for recommending the acquisition of other related service information. Thereby, an advertising effect can be obtained.

Sixth, service information is information for acquiring and providing electronic information.

Thereby, for example, electronic values such as electronic tickets, and contents can be delivered and used.

Seventh, service information is information for making electronic information available.

Thereby, for example, electronic values such as delivered electronic tickets and contents can be used.

Eighth, it is determined whether or not situation information satisfies compliance situation information as one of use conditions.

Thereby, services can be provided according to more specific situations.

Ninth, service information is information for acquiring and providing licenses. Thereby, for example, electronic values such as electronic tickets and contents can be used in limited areas or delivered to limited areas.

Tenth, service information is information for canceling and updating licenses. Thereby, licenses can be elaborately managed according to the situation of the electronic device.

## Claims

1. An electronic device comprising:
a situation information acquisition part for acquiring situation information, which is dynamic information;
a determining part for determining whether a service can be executed, based on situation information acquired in the situation information acquisition part;
a service information acquisition part for acquiring service information, which is information for executing a service;
an execution part for executing service information; and
a situation information correctness determining part for determining correctness of situation information acquired in the situation information acquisition part.

2. The electronic device according to claim 1, wherein the situation information acquisition part acquires situation information from plural means information sources, and the situation information correctness determining part determines the correctness of the situation information by determining whether or not the situation information acquired from the plural means information sources matches.

3. The electronic device according to claim 1, including situation information reliability rank providing means for ranking reliability of said situation information, based on sources of the situation information acquired in the situation information acquisition part, situation information acquisition routes, or combinations of the sources of situation information and routes of acquiring the situation information, wherein the situation information correctness determining part determines the correctness of the situation information, using a rank provided by the situation information reliability rank providing means.

4. The electronic device according to claim 1, including situation information accuracy rank providing means for ranking accuracy of said situation information, based on sources of situation information acquired in the situation information acquisition part, wherein the situation information correctness determining part determines the correctness of the situation information, using a rank provided by the situation information accuracy rank providing means.

5. The electronic device according to claim 1 or 2, including the situation information reliability rank providing means for ranking reliability of said situation information, based on sources of the situation information acquired in the situation information acquisition part, situation information acquisition routes, or combinations of the sources of situation information and routes of acquiring the situation information, and the situation information accuracy rank providing means for ranking accuracy of said situation information, based on the sources of situation information acquired in the situation information acquisition part, wherein the situation information correctness determining part determines the correctness of the situation information, using ranks provided by the situation information reliability rank providing means and the situation information accuracy rank providing means.

6. The electronic device according to claim 3, wherein the situation information reliability rank providing means rank the reliability of situation information, based on encrypted information.

7. The electronic device according to claim 5, wherein the situation information reliability rank providing means rank the reliability of situation information, based on encrypted information.

8. An electronic device comprising:
a situation information acquisition part for acquiring situation information, which is dynamic information;
a determining part for determining whether a service can be executed, based on situation information acquired in the situation information acquisition part;
a service information acquisition part for acquiring service information, which is information for executing a service;
an execution part for executing acquired service information; and
a condition information acquisition part for, when the determining part determines that a service cannot be executed, acquiring service available information for the service to become available.

9. The electronic device according to claim 1, wherein the service information is information for acquiring electronic information.

10. The electronic device according to claim 8, wherein the service information is information for acquiring electronic information.

11. The electronic device according to claim 1, wherein the service information is information for providing electronic information.

12. The electronic device according to claim 8, wherein the service information is information for providing electronic information.

13. The electronic device according to claim 1, wherein the service information is information for making electronic information available.

14. The electronic device according to claim 8, wherein the service information is information for making electronic information available.

15. The electronic device according to claim 9, wherein
the electronic information becomes available when a license describing conditions for using the electronic information is satisfied;
one of said use conditions is compliance situation information, which is information related to situation information; and
the determining part determines whether or not situation information acquired in the situation information acquisition part satisfies said compliance situation information.

16. The electronic device according to claim 10, wherein
the electronic information becomes available when a license describing conditions for using the electronic information is satisfied;
one of said use conditions is compliance situation information, which is information related to situation information; and
the determining part determines whether or not situation information acquired in the situation information acquisition part satisfies said compliance situation information.

17. The electronic device according to claim 11, wherein
the electronic information becomes available when a license describing conditions for using the electronic information is satisfied;
one of said use conditions is compliance situation information, which is information related to situation information; and
the determining part determines whether or not situation information acquired in the situation information acquisition part satisfies said compliance situation information.

18. The electronic device according to claim 12, wherein
the electronic information becomes available when a license describing conditions for using the electronic information is satisfied;
one of said use conditions is compliance situation information, which is information related to situation information; and
the determining part determines whether or not situation information acquired in the situation information acquisition part satisfies said compliance situation information.

19. The electronic device according to claim 13, wherein
the electronic information becomes available when a license describing conditions for using the electronic information is satisfied;
one of the said conditions is compliance situation information, which is information related to situation information; and
the determining part determines whether or not situation information acquired in the situation information acquisition part satisfies said compliance situation information.

20. The electronic device according to claim 14, wherein
the electronic information becomes available when a license describing conditions for using the electronic information is satisfied;
one of said use conditions is compliance situation information, which is information related to situation information; and
the determining part determines whether or not situation information acquired in the situation information acquisition part satisfies said compliance situation information.

21. The electronic device according to claim 1, wherein, when, for given service information (service information A), service information (service information B) related to the service information exists, the service information A includes recommendation information for recommending acquisition of the service information B.

22. The electronic device according to claim 8, wherein, when, for given service information (service information A), service information (service information B) related to the service information exists, the service information A includes recommendation information for recommending acquisition of the service information B.

23. The electronic device according to claim 1, wherein the service information is information for acquiring a license.

24. The electronic device according to claim 8, wherein the service information is information for acquiring a license.

25. The electronic device according to claim 1, wherein the service information is information for providing a license.

26. The electronic device according to claim 8, wherein the service information is information for providing a license.

27. The electronic device according to claim 1, wherein the service information is information for canceling a license.

28. The electronic device according to claim 8, wherein the service information is information for canceling a license.

29. The electronic device according to claim 1, wherein the service information is information for updating a license.

30. The electronic device according to claim 8, wherein the service information is information for updating a license.
